# EUROPEAN PATENT SPECIFICATION

(11) **EP 4 604 403 B1**
(45) Date of publication and mention of the grant of the patent: **04.11.2026**
(21) Application number: 23884460.9
(22) Date of filing: 08.09.2023
(51) Int. Cl.: H04B 1/00, H04B 1/40, H04B 7/0413, H04L 5/14

(54) **MULTIPLEXER, RADIO FREQUENCY MODULE AND ELECTRONIC DEVICE**
MULTIPLEXER, HOCHFREQUENZMODUL UND ELEKTRONISCHE VORRICHTUNG
MULTIPLEXEUR, MODULE RADIOFRÉQUENCE ET DISPOSITIF ÉLECTRONIQUE

(30) Priority: 02.11.2022 CN 202211360265
(43) Date of publication of application: 20.08.2025
(73) Proprietor: Honor Device Co., Ltd., Shenzhen, Guangdong 518040 (CN)
(72) Inventor: HUANG, Qinghua, Shenzhen, Guangdong 518040 (CN); WANG, Tong, Shenzhen, Guangdong 518040 (CN); FENG, Li, Shenzhen, Guangdong 518040 (CN); LIU, Shumin, Shenzhen, Guangdong 518040 (CN); FENG, Baoxin, Shenzhen, Guangdong 518040 (CN)
(74) Representative: Isarpatent
(86) International application number: PCT/CN2023/117811
(87) International publication number: WO 2024/093527

(56) References cited:
- WO-A1-2022/143086
- CN-A- 105 099 493
- CN-A- 111 245 468
- CN-A- 112 272 030
- CN-A- 115 412 118
- US-A1- 2015 229 463
- US-A1- 2016 218 767
- US-A1- 2016 323 080

## Description

Priority is claimed to Chinese Patent Application No. 202211360265.3, filed with the China National Intellectual Property Administration on November 2, 2022 and entitled "MULTIPLEXER, RADIO FREQUENCY MODULE, AND ELECTRONIC DEVICE".

### TECHNICAL FIELD

The disclosure generally relates to the field of communication, and the invention in particular, relates to a multiplexer, a radio frequency module, and an electronic device.

### BACKGROUND

A time-division duplex (TDD) mode and a frequency-division duplex (FDD) mode are two common duplex manners. The TDD mode refers to a working mode of a receive channel (Receive, RX) and a transmit channel (Transport, TX) in different slots on a same frequency channel, and the FDD mode refers to a working mode of RX and TX on different frequency channels. In the field of communication, a frequency band to which the TDD mode is applied may be referred to as a TDD frequency band, and a frequency band to which the FDD mode is applied may be referred to as an FDD frequency band. For example, the TDD frequency band includes N40, N41, and the like, and the FDD frequency band includes B1, B3, and the like.

It may be understood that in the FDD mode, RX and TX simultaneously work, and in the TDD mode, RX and TX work in a time-sharing manner. Therefore, for a signal in the FDD frequency band, different filters need to be configured for RX and TX. For a signal in the TDD frequency band, RX and TX may reuse a same filter.

When a filter used for the signal in the FDD frequency band and a filter used for the signal in the TDD frequency band form a multiplexer in a multi-on manner, switching of the signal in the TDD frequency band between TX and RX cause impedance of a port of the signal in the FDD frequency band to change, causing a gain and a phase of the signal in the FDD frequency band to jump. As a result, an error vector magnitude (EVM) deteriorates, affecting a throughput rate of the signal in the FDD frequency band.

US 2016/0323080 A1 discloses a plurality of filters for FDD and TDD operations.

### SUMMARY

The object of the invention is to provide a multiplexer, a radio frequency module, and an electronic device. When a signal in a TDD frequency band is switched between a transmission slot and a receiving slot, impedance of an output port of a signal in an FDD frequency band does not change. Therefore, a gain and a phase of the signal in the FDD frequency band do not change, thereby ensuring that a throughput rate of the signal is not affected. The above mentioned object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing objective, the following technical solutions are used in embodiments of this invention.

According to a first aspect according to the invention, a multiplexer is provided, configured to transmit a first signal and a second signal, where the first signal is a signal in a time-division duplex frequency band, and the second signal is a signal in a frequency-division duplex frequency band. The multiplexer includes: a first link, a second link, a third link, and a fourth link. The first link includes a first filter. A passband of the first filter is an uplink frequency band of the second signal. The second link includes a second filter. A passband of the second filter is a downlink frequency band of the second signal. Both the first link and the second link work on a first antenna through a first port. The first link is used to send the second signal. The second link is used to receive the second signal. The third link includes a third filter. The fourth link includes a fourth filter. A passband of the third filter and a passband of the fourth filter are frequency bands covered by the first signal. In a transmission slot of the first signal, the third link is connected to the first port, and the third link does not work. The fourth link sends the first signal through a second port, and the second port is different from the first port. In a receiving slot of the first signal, the third link works on the first antenna through the first port, to perform primary MIMO receiving of the first signal. The fourth link performs primary receiving of the first signal through the second port.

Based on the solution, when the first signal is switched between the transmission slot and the receiving slot, impedance of an output port of the second signal, that is, impedance of the first port, does not change. Therefore, a gain and a phase of the second signal do not change, thereby ensuring that a throughput rate of the second signal is not affected. In addition, a signal transmission path of the first signal is the same as a primary receiving path of the first signal, which does not violate a software constraint of a platform, and has good versatility.

According to the invention, the first link, the second link, and the third link further include a first switch. The third link further includes a second switch. The fourth link further includes a third switch. The first switch is connected to the first port. One end of the first filter is connected to the first switch, and an other end of the first filter is connected to a signal source of the second signal. The signal source of the second signal is used to output an uplink signal of the second signal. One end of the second filter is connected to the first switch, and an other end of the second filter is connected to a receiving port of the second signal. The receiving port of the second signal is configured to receive a downlink signal of the second signal received by the first antenna. One end of the second switch is connected to a primary MIMO receiving port of the first signal, and an other end of the second switch is connected to the first switch through the third filter. The primary MIMO receiving port of the first signal is configured to perform primary MIMO receiving of the first signal. The third switch is separately connected to a signal source of the first signal, a primary receiving port of the first signal, and the fourth filter. The fourth filter is further connected to the second port. The second port is further connected to a second antenna. The signal source of the first signal is used to output the first signal. The primary receiving port of the first signal is configured to perform primary receiving of the first signal. The first switch is configured to connect the first filter, the second filter, and the third filter to the first port. The second switch is configured to be turned off in the transmission slot of the first signal, and connect the third filter to the primary MIMO receiving port of the first signal in the receiving slot of the first signal. The third switch is configured to connect the signal source of the first signal to the fourth filter, and disconnect the primary receiving port of the first signal from the fourth filter in the transmission slot of the first signal, and connect the primary receiving port of the first signal to the fourth filter, and disconnect the signal source of the first signal from the fourth filter in the receiving slot of the first signal. Based on the solution, a pathway may be switched easily.

In a possible design, the uplink signal of the second signal is transmitted from the signal source of the second signal to the first antenna after sequentially passing through the first filter, the first switch, and the first port, to cause the first antenna to transmit the uplink signal of the first signal. After being received by the first antenna, the downlink signal of the second signal is transmitted to the receiving port of the second signal after sequentially passing through the first port, the first switch, and the second filter, to cause the receiving port of the second signal to complete receiving. Based on the solution, sending and receiving of the second signal may be implemented.

In a possible design, in the transmission slot of the first signal, the first signal is transmitted from the signal source of the first signal to the second antenna after sequentially passing through the third switch, the fourth filter, and the second port, to cause the second antenna to transmit the first signal. A primary receiving path of the first signal is the second antenna, the second port, the fourth filter, the third switch, and a primary receiving port of the second signal in the receiving slot of the first signal. A primary MIMO receiving path of the first signal is the first antenna, the first port, the first switch, the third filter, the second switch, and the primary MIMO receiving port of the first signal. Based on the solution, transmission and dual-stream receiving of the first signal may be implemented.

In a possible design, the multiplexer further includes a fifth link and a sixth link. The fifth link is connected to a fourth antenna through a third port. The sixth link is connected to a third antenna through a fourth port. The third port is different from the first port. The fourth port is different from the first port. The fifth link is used to perform diversity receiving of the first signal through the fourth antenna in the receiving slot of the first signal. The sixth link is used to perform diversity MIMO receiving of the first signal through the third antenna in the receiving slot of the first signal. Based on the solution, four-path receiving of the first signal may be implemented, thereby improving signal receiving efficiency.

In a possible design, the fifth link includes a fifth filter and a fourth switch. One end of the fifth filter is connected to a diversity receiving port of the first signal, and an other end of the fifth filter is connected to the fourth switch. The diversity receiving port of the first signal is configured to perform diversity receiving of the first signal. The fourth switch is connected to the third port. The fourth filter is connected to the second port through the fourth switch. The sixth link includes the first switch. The first switch is separately connected to the fourth port and a diversity MIMO receiving port of the first signal. The diversity MIMO receiving port of the first signal is configured to perform diversity MIMO receiving of the first signal. A passband of the fifth filter is a frequency band covered by the first signal. The first switch is further configured to disconnect the diversity MIMO receiving port of the first signal from the fourth port in the transmission slot of the first signal, and connect the diversity MIMO receiving port of the first signal and the fourth port in the receiving slot of the first signal. The fourth switch is further configured to connect the fourth filter and the second port, and disconnect the fifth filter from the third port in the transmission slot of the first signal, and connect the fourth filter and the second port, and connect the fifth filter and the third port in the receiving slot of the first signal. Based on the solution, a pathway may be switched easily.

In a possible design, a diversity receiving path of the first signal is the fourth antenna, the third port, the fourth switch, the fifth filter, and the diversity receiving port of the first signal in the receiving slot of the first signal. A diversity MIMO receiving path of the first signal is the third antenna, the fourth port, the first switch, and the diversity MIMO receiving port of the first signal. Based on the solution, four-path receiving of the first signal may be implemented.

In a possible design, the first signal is a high frequency signal, and the second signal is an intermediate frequency signal. Based on the solution, commonly used ENDC scenarios such as B1+41 and B3+41 may be implemented.

According to a second aspect according to the invention, a radio frequency module is provided. The radio frequency module includes: a first power amplifier, a second power amplifier, a first low noise amplifier, a second low noise amplifier, a third low noise amplifier, and the multiplexer according to any one of the first aspect. A first filter in the multiplexer is connected to a signal source of a second signal through the first power amplifier. A second filter in the multiplexer is connected to a receiving port of the second signal through the first low noise amplifier. A third filter in the multiplexer sequentially passes through a second switch in the multiplexer, and is connected to a primary MIMO receiving port of a first signal through the second low noise amplifier. A third switch in the multiplexer is connected to a signal source of the first signal through the second power amplifier, and the third switch is further connected to a primary receiving port of the first signal through the third low noise amplifier. The power amplifier is configured to amplify a radio frequency power of a corresponding signal. The low noise amplifier is configured to filter noise in the corresponding signal.

According to a third aspect according to the invention, an electronic device is provided. The electronic device includes the multiplexer according to any one of the first aspect or the radio frequency module according to the second aspect.

It should be understood that technical features of the technical solution provided in the second aspect and the third aspect above can all correspond to the multiplexer provided in the first aspect and any possible design of the first aspect, and therefore, similar beneficial effects may be achieved. Details are not repeated herein.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a multiplexer;
FIG. 2 is a schematic diagram of a working state of a multiplexer;
FIG. 3 is a schematic diagram of a working state of a multiplexer;
FIG. 4 is a schematic diagram of a structure of an electronic device according to an embodiment of this invention;
FIG. 5 is a schematic diagram of a multiplexer according to an embodiment of this invention;
FIG. 6 is a schematic diagram of still another multiplexer according to an embodiment of this invention;
FIG. 7 is a schematic diagram of a gain curve of a B3 uplink signal according to an embodiment of this invention;
FIG. 8 is a schematic diagram of a phase curve of a B3 uplink signal according to an embodiment of this invention;
FIG. 9 is a schematic diagram of a gain curve of a B3 downlink signal according to an embodiment of this invention;
FIG. 10 is a schematic diagram of a phase curve of a B3 downlink signal according to an embodiment of this invention;
FIG. 11 is a schematic diagram of still another multiplexer according to an embodiment of this invention;
FIG. 12 is a schematic diagram of still another multiplexer according to an embodiment of this invention;
FIG. 13 is a schematic diagram of a radio frequency module according to an embodiment of this invention;
FIG. 14 is a schematic diagram of working of a communication module according to an embodiment of this application;
FIG. 15 is a schematic diagram of working of still another communication module according to an embodiment of this application;
FIG. 16 is a schematic diagram of working of still another radio frequency module according to an embodiment of this application;
FIG. 17 is a schematic diagram of working of still another radio frequency module according to an embodiment of this application; and
FIG. 18 is a schematic diagram of working of still another radio frequency module according to an embodiment of this application.

### DESCRIPTION OF EMBODIMENTS

In embodiments of this application, the terms "first", "second", "third", and the like are intended to distinguish between different objects but do not indicate a particular order. In addition, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

To facilitate understanding of embodiments of this application, the following describes, by using a multiplexer formed by N41 in a TDD frequency band and B1+B3 in an FDD frequency band as an example, an impact on impedance of the multiplexer when N41 is switched between RX and TX.

It should be noted that a frequency range corresponding to an N41 frequency band is 2496 MHz to 2690 MHz. Because N41 is the TDD frequency band, a frequency range corresponding to an uplink (Uplink) frequency band of N41 is the same as a frequency range corresponding to a downlink (Downlink) frequency band of N41, and both the frequency ranges are the frequency range corresponding to the N41 frequency band. A frequency range corresponding to an uplink frequency band of B1 is 1920 MHz to 1980 MHz, and a frequency range corresponding to a downlink frequency band of B1 is 2110 MHz to 2170 MHz. A frequency range corresponding to an uplink frequency band of B3 is 1710 MHz to 1785 MHz, and a frequency range corresponding to a downlink frequency band of B3 is 1805 MHz to 1880 MHz.

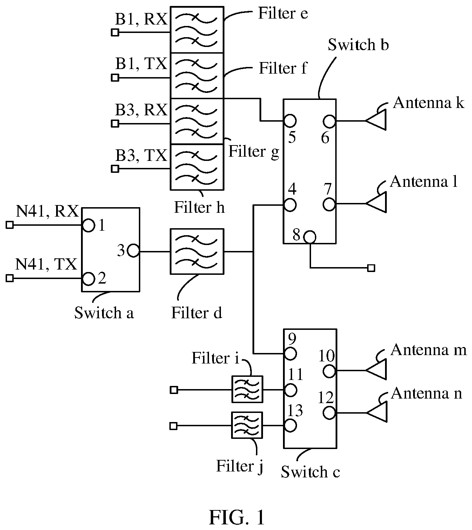

FIG. 1 is a schematic diagram of a multiplexer. As shown in FIG. 1, the multiplexer includes a switch a, a switch b, a switch c, a filter d, a filter e, a filter f, a filter g, a filter h, a filter i, a filter j, an antenna k, an antenna 1, an antenna m, and an antenna n.

The switch a includes a port 1, a port 2, and a port 3. The port 1 is a primary MIMO (Multiple-Input Multiple-Output, multiple-input multiple-output) receiving port of N41. Output of the port 1 is connected to an LNA (Low Noise Amplifier, low noise amplifier). The LNA is not shown in FIG. 1. The port 1 is configured to receive a downlink primary MIMO signal of N41 in a receiving slot of N41. The port 2 is a sending port of N41 and is connected to a PA (Power Amplifier, power amplifier) of N41. The power amplifier is not shown in FIG. 1. The port 2 is configured to output an uplink signal of N41 amplified by the PA in a transmission slot of N41. The port 3 is separately connected to the switch b and the switch c through the filter d.

The switch a is an uplink and downlink switching switch of N41, and is configured to control the port 1 to be connected to the port 3, and control the port 2 to be disconnected from the port 3 in the receiving slot of the N41. The switch a is further configured to control the port 2 to be connected to the port 3, and control the port 1 to be disconnected from the port 3 in the transmission slot of N41.

The filter d is configured to allow a signal in the N41 frequency band to pass, and filter out a signal in another frequency band other than N41.

The switch b includes a port 4, a port 5, a port 6, a port 7, and a port 8. The port 4 is connected to the port 3 of the switch a through the filter d. The filter e, the filter f, the filter g, and the filter h form a quadruplexer, including the filter e, the filter f, the filter g, and the filter h. A common port of the filter e, the filter f, the filter g, and the filter h is connected to the port 5 of the switch b. The port 6 is connected to the antenna k. The port 7 is connected to the antenna 1. The port 8 is connected to a diversity MIMO receiving port of N41.

In this example, the filter e may be RX of B1 and is configured to allow a signal in a B1 downlink frequency band to pass, and filter out a signal in another frequency band other than the signal in the B1 downlink frequency band. The filter f may be TX of B1 and is configured to allow a signal in a B1 uplink frequency band to pass, and filter out a signal in another frequency band other than the signal in the B1 uplink frequency band. The filter g may be RX of B3 and is configured to allow a signal in a B3 downlink frequency band to pass, and filter out a signal in another frequency band other than the signal in the B3 downlink frequency band. The filter h may be TX of B3 and is configured to allow a signal in a B3 uplink frequency band to pass, and filter out a signal in another frequency band other than the signal in the B3 uplink frequency band.

The switch b is configured to control the port 5 to be connected to the port 6, control the port 7 to be connected to the port 8, and control the port 4 to be disconnected in the transmission slot of N41 and when B1 and/or B3 works. The switch b is further configured to control the port 5 to be connected to the port 6, and simultaneously control the port 4 to be connected to the port 6 in the receiving slot of N41 and when B1 and/or B3 works, so that the port 4 and the port 5 are dual-on, and are connected to the port 6. The port 7 is connected to the port 8.

The antenna k is a transceiver antenna of B1 and B3, and is configured to transmit and receive signals in the B1 frequency band and the B3 frequency band. The antenna k is further a primary MIMO receiving antenna of N41, and is configured to receive a primary MIMO signal of N41.

The antenna 1 is a diversity MIMO receiving antenna of N41, and is configured to receive a diversity MIMO signal of N41.

It is to be noted that descriptions of the antenna k and the antenna 1 are only examples. In actual application, the antenna k and the antenna 1 may alternatively be exchanged. This is not specifically limited herein.

The switch c includes a port 9, a port 10, a port 11, a port 12, and a port 13. The port 9 is connected to the filter d. The port 10 is connected to the antenna. The port 11 is connected to a primary receiving port of N41 through the filter i. The port 12 is connected to the antenna n. The port 13 is connected to a diversity receiving port of N41 through the filter j.

The switch c is configured to control the port 10 to be connected to the port 11, control the port 12 to be connected to the port 13, and control the port 9 to be disconnected in the receiving slot of N41. The switch c is further configured to control the port 9 to be connected to the port 10, and control the port 11, the port 12, and the port 13 to be disconnected in the transmission slot of N41.

The antenna m is a primary transceiver antenna of N41, and is configured to transmit and receive primary signals of N41.

The antenna n is a diversity receiving antenna of N41, and is configured to receive a diversity signal of N41.

In other words, in the transmission slot of N41, the signal of N41 is transmitted through the antenna m. In the receiving slot of N41, the antenna m is a primary receiving antenna of N41, and the antenna n is the diversity receiving antenna of N41. The antenna k is the primary MIMO receiving antenna of N41. The antenna 1 is the diversity MIMO receiving antenna of N41. Four-path receiving of N41 is implemented through the antenna m, the antenna n, the antenna k, and the antenna 1. Similar to the antenna k and the antenna 1, the antenna m and the antenna n may alternatively be exchanged. Limitations on the antenna m and the antenna n are only examples for description.

Both the filter i and the filter j are configured to allow the signal in the N41 frequency band to pass, and filter out a signal in another frequency band other than N41.

A structure of the multiplexer is described above. Based on the foregoing description, a working principle of the multiplexer is introduced below.

It is to be noted that both B1 and B3 are the FDD frequency bands. In other words, receiving and transmission of B1 may be simultaneously performed, and receiving and transmission of B3 may also be simultaneously performed. N41 is the TDD frequency band, and transmission and receiving of N41 need to be performed in a time-sharing manner.

An ENDC (E-UTRAN New Radio-Dual Connectivity, dual connectivity of 4G and 5G) scenario of B3+N41 is used as an example below, to describe a working principle of the multiplexer shown in FIG. 1.

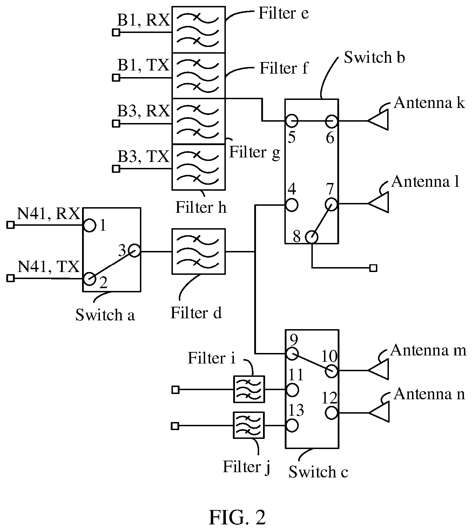

In the ENDC scenario of B3+N41, when N41 is in the transmission slot, a state of each switch in the multiplexer shown in FIG. 1 is shown in FIG. 2. FIG. 2 is a schematic diagram of a working state of a multiplexer. It may be learnt from FIG. 2 that in the switch a, the port 2 is connected to the port 3, and the port 1 is disconnected. In the switch b, the port 5 is connected to the port 6, the port 4 is disconnected, and the port 7 is connected to the port 8. In the switch c, the port 9 is connected to the port 10, and the port 11, the port 12, and the port 13 are all disconnected.

A signal transmission path of B3 is that a signal in a B3 uplink frequency band flows into the multiplexer from a sending port of B3, and is transmitted to the filter h; after filtering processing is performed by the filter, the signal is transmitted to the port 5 of the switch b; and because the port 5 is connected to the port 6, the signal is transmitted from the port 5 to the port 6, is transmitted to the antenna k through the port 6, and is transmitted by the antenna k.

B3 has two paths of receiving, which are respectively primary receiving and diversity receiving. A signal primary receiving path is that after being received by the antenna k, a signal is transmitted to the port 6; because the port 6 is connected to the port 5, the signal is transmitted from the port 6 to the port 5; and because the filter e, the filter f, and the filter h that are connected to the port 5 each filter out the signal in a B3 downlink frequency band, the signal is transmitted from the port 5 to a receiving port of B3 through the filter g, to complete primary receiving of B3.

A signal diversity receiving path of B3 is that after being received by the antenna 1, a signal is transmitted to the port 7; and because the port 7 is connected to the port 8, the signal is transmitted from the port 7 to the port 8. In this example, the port 8 may be externally connected to a diversity receiving module (which is not shown in FIG. 2) such as an LDiFEM, to implement amplification and receiving of B3 diversity in the diversity receiving module.

A signal transmission path of N41 is that a sending signal of N41 flows into the switch a from a PA of N41, and is transmitted to the port 2; because the port 2 is connected to the port 3, the signal is transmitted from the port 2 to the port 3; and after passing through the port 3, the signal continues to flow through the filter d, and filtering processing is performed on the signal by the filter d. Because the port 4 is disconnected in the switch b, and the port 9 is connected to the port 10 in the switch c, the signal is transmitted to the switch c after passing through the filter d, and is then transmitted to the port 10 through the port 9 of the switch c. After passing through the port 10, the signal is transmitted to the antenna m, and is transmitted by the antenna m.

It is to be noted that the reason why the signal in B3 and the signal in N41 are not transmitted to the same antenna through the same switch is that TX of B3 and fourth-order intermodulation of N41 fall in a frequency band of a B3 receive channel, and nonlinearity of the switch (the switch b in FIG. 2) produces IMD4, affecting sensitivity of the B3 receive channel. The switch b requires relatively high linearity, so that B3TX and N41 are transmitted through the same antenna. The linearity design presents a great challenge. Therefore, it is necessary to avoid transmission of B3 and N41 through the same antenna as much as possible.

It may be learnt that in the ENDC scenario of B3+N41, when N41 is in the transmission slot, TX, primary receiving (PRX), and diversity receiving (DRX) of B3 simultaneously work. TX and primary receiving of B3 use the antenna k, and diversity receiving of B3 uses the antenna 1. For TX and PRX of B3, impedance of an output port (that is, impedance of the port 6) of the signal in the B3 frequency band is mainly generated by a filter that is connected to the port 6. The filters that are connected to the port 6 include the filter e, the filter f, the filter g, and the filter h.

It should be noted that although the filter d is connected to the switch b, the port 4 of the switch b is disconnected from the port 6, and the filter d is not connected to the port 6, so that the impedance at the port 6 is not affected.

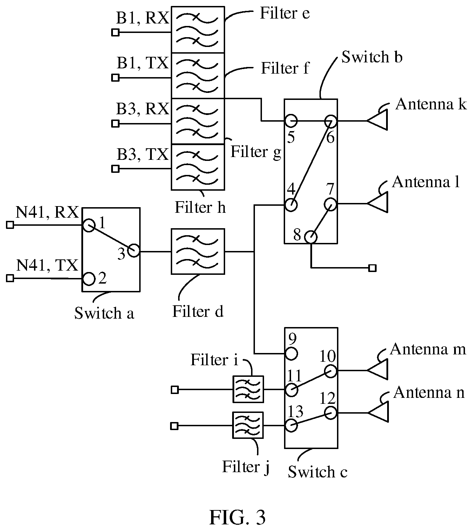

In the ENDC scenario of B3+N41, when N41 is in the receiving slot, the state of each switch in the multiplexer shown in FIG. 1 is shown in FIG. 3. FIG. 3 is a schematic diagram of a working state of a multiplexer. It may be learnt from FIG. 3 that in the switch a, the port 1 is connected to the port 3, and the port 2 is disconnected. In the switch b, the port 5 is connected to the port 6, and the port 4 is connected to the port 6, to implement multi-on from the port 4 and the port 5 to the port 6; and the port 7 is connected to the port 8. In the switch c, the port 10 is connected to the port 11, the port 12 is connected to the port 13, and the port 9 is disconnected.

A signal transmission path of B3 is the same as the signal transmission path of B3 in FIG. 2. A signal receiving path (primary receiving and diversity receiving) of B3 is also the same as the signal receiving path of B3 in FIG. 2. This is not described herein again.

Four-path receiving is performed in N41. The four receiving paths are a path 1, a path 2, a path 3, and a path 4 respectively. A detailed description is provided below.

Path 1: The antenna m as a primary receiving antenna receives a primary receiving signal in N41, and transmits the primary receiving signal to the port 10; because the port 10 is connected to the port 11, and the port 11 is connected to the filter i, the primary receiving signal is transmitted to the filter i after sequentially passing through the port 10 and the port 11; and after the filter i performs filtering processing on the primary receiving signal in N41, the primary receiving signal is transmitted to a primary receiving port of N41, and receiving of the primary receiving signal in N41 is completed.

Path 2: The antenna n as a diversity receiving antenna receives a diversity receiving signal in N41, and transmits the diversity receiving signal to the port 12; because the port 12 is connected to the port 13, and the port 13 is connected to the filter j, the diversity receiving signal is transmitted to the filter j after sequentially passing through the port 12 and the port 13; and after the filter j performs filtering processing on the primary receiving signal in N41, the diversity receiving signal is transmitted to a diversity receiving port of N41, and receiving of the diversity receiving signal in N41 is completed.

Path 3: The antenna k as a primary MIMO receiving antenna of N41 receives a primary MIMO receiving signal in N41, and transmits the primary MIMO receiving signal to the port 6; the port 6 is connected to both the port 5 and the port 4, but only the filter d among the filters connected to the port 5 enables the signal in N41 to pass, so that the primary MIMO receiving signal is transmitted to the filter d after sequentially passing through the port 6 and the port 4; after performing filtering processing on the primary MIMO receiving signal, the filter d transmits the primary MIMO receiving signal to the port 3 of the switch a; and because the port 3 is connected to the port 1, and the port 1 is connected to a primary MIMO receiving port of N41, the primary MIMO receiving signal is transmitted to the primary MIMO receiving port of N41 after sequentially passing through the port 3 and the port 1, and receiving of the primary MIMO receiving signal is completed.

Path 4: The antenna 1 as a diversity MIMO receiving antenna of N41 receives a diversity MIMO receiving signal in N41, and transmits the diversity MIMO receiving signal to the port 7 of the switch b; because the port 7 is connected to the port 8, and the port 8 is connected to the diversity MIMO receiving port, the diversity MIMO receiving signal reaches the diversity MIMO receiving port after sequentially passing through the port 7 and the port 8, and receiving of the diversity MIMO receiving signal is completed. It should be noted that a signal processing component such as a filter, a low noise amplifier, or a receiving module corresponding to the diversity MIMO receiving signal may further be disposed between the port 8 and the diversity MIMO receiving port. The receiving module connected to the port 8 may implement CA (Carrier Aggregation, carrier aggregation) of B3+41. In other words, the antenna 1 may simultaneously receive B3 and N41, to complete diversity receiving of B3 and diversity MIMO receiving of n41.

It may be learnt that in the ENDC scenario of B3+N41, when N41 is in the receiving slot, filters that are connected to the port 6 include the filter d, the filter e, the filter f, the filter g, and the filter h. Compared with N41 in the transmission slot, the impedance of the port 6 is further affected by the filter d.

Therefore, it may be understood that in the ENDC scenario of B3+N41, when N41 is switched between the transmission slot and the receiving slot, the impedance of the output port of the signal in the B3 frequency band jumps regardless of whether N41 is switched from the transmission slot to the receiving slot, or switched from the receiving slot to the transmission slot. In addition, the signal transmission path of N41 is different from a primary receiving path of N41, which violates a software constraint of a platform, resulting in poor versatility of the multiplexer.

The impedance of the port 6 jumps, which causes a gain and a phase of B3TX and B3RX to jump. An EVM is very sensitive to changes in the gain and the phase. Small changes in the gain and the phase may cause the EVM to deteriorate. For high-order modulation, for example, 256 QAM (Quadrature Amplitude Modulation, quadrature amplitude modulation), deterioration of the EVM seriously affects a signal-to-noise ratio, affecting a throughput rate of the signal in the B3 frequency band.

To resolve the foregoing problems, embodiments of this application provide a multiplexer, a radio frequency module, and an electronic device, which can resolve a problem that when transmission and receiving of a path corresponding to a signal in a TDD frequency band are switched, impedance of an output port of a signal in an FDD frequency band jumps, thereby ensuring that a throughput rate of the signal in the FDD frequency band is not affected. In addition, a signal transmission path of the TDD frequency band is the same as a primary receiving path of the TDD frequency band in the multiplexer, which does not violate a software constraint of a platform, and has good versatility.

The multiplexer and the radio frequency module provided in embodiments of this application may be used in the electronic device. The electronic device may refer to a device provided with an antenna, a multiplexer, and a radio frequency module, for example, a mobile phone, a tablet computer, a wearable device (for example, a smart watch), a vehicle-mounted device, a laptop (Laptop), and a desktop computer. An example of an embodiment of the terminal device includes but is not limited to a portable terminal carrying an iOS^{®}, an Android^{®}, a Microsoft^{®}, or another operating system.

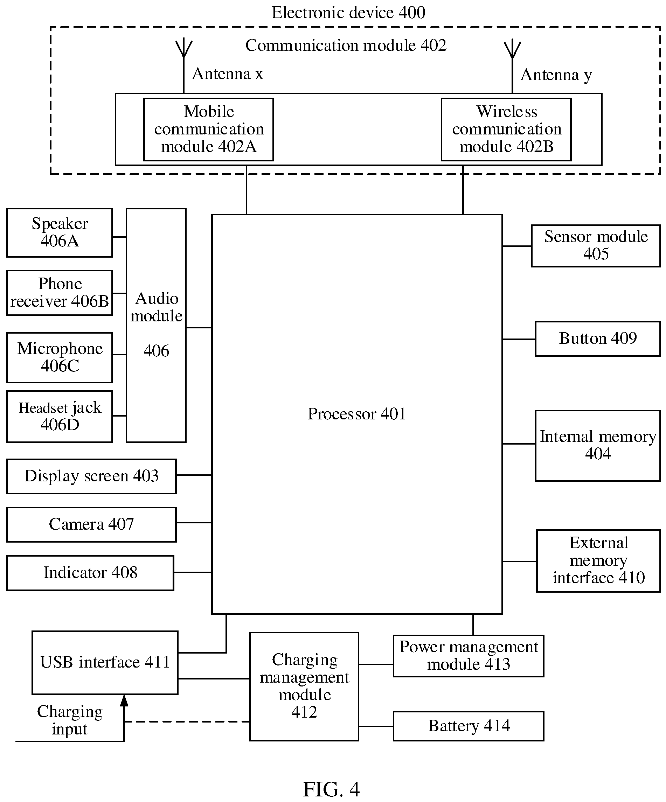

As an example, FIG. 4 is a schematic diagram of a structure of an electronic device 400 according to an embodiment of this application.

As shown in FIG. 4, the electronic device 400 may include a processor 401, a communication module 402, a display screen 403, and the like.

The processor 401 may include one or more processing units. For example, the processor 401 may include an application processor (application processor, AP), a modem processor, a graphics processing unit (graphics processing unit, GPU), an image signal processor (image signal processor, ISP), a controller, a memory, a video stream codec, a digital signal processor (digital signal processor, DSP), a baseband processor, and/or a neural-network processing unit (neural-network processing unit, NPU). Different processing units may be independent components, or may be integrated into one or more processors 401.

The controller may be a nerve center and a command center of the electronic device 400. The controller may generate an operation control signal based on an instruction operation code and a time sequence signal, to complete control of instruction fetching and instruction execution.

A memory may be further disposed in the processor 401, and is configured to store instructions and data. In some embodiments, the memory in the processor 401 is a cache memory. The memory may store instructions or data recently used or cyclically used by the processor 401. If the processor 401 needs to use the instructions or the data again, the processor may directly invoke the instructions or the data from the memory. This avoids repeated access, and reduces waiting time of the processor 401, thereby improving system efficiency.

In some embodiments, the processor 401 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface 411, and/or the like.

The electronic device 400 may implement a display function through the GPU, the display screen 403, the application processor 401, and the like. The GPU is a microprocessor for image processing, and is connected to the display screen 403 and the processor 401. The GPU is configured to perform mathematical and geometric computation, and render an image. The processor 401 may include one or more GPUs, which execute program instructions to generate or change display information.

The display screen 403 is configured to display an image, a video stream, and the like.

A communication module 402 may include an antenna x, an antenna y, a mobile communication module 402A, and/or a wireless communication module 402B. An example in which the communication module 402 includes the antenna x, the antenna y, the mobile communication module 402A, and the wireless communication module 402B is used.

In addition, the multiplexer and the radio frequency module provided in embodiments of this application may also be disposed in the communication module 402.

A wireless communication function of the electronic device 400 may be implemented through the antenna x, the antenna y, the mobile communication module 402A, the wireless communication module 402B, the modem processor, the baseband processor, and the like.

The antenna x and the antenna y are configured to transmit and receive electromagnetic wave signals. Each antenna in the electronic device 400 may be configured to cover one or more communication frequency bands. Different antennas may be further multiplexed, to improve utilization of the antennas. For example, the antenna x may be multiplexed as a diversity antenna of a wireless local area network. In some other embodiments, the antenna may be used in combination with a tuning switch.

The mobile communication module 402A may provide a wireless communication solution that is applied to the electronic device 400 and that includes 2G/3G/4G/5G. The mobile communication module 402A may include at least one filter, a switch, a power amplifier, a low noise amplifier (low noise amplifier, LNA), and the like. The mobile communication module 402A may receive an electromagnetic wave through the antenna x, perform processing such as filtering and amplification on the received electromagnetic wave, and transmit a processed electromagnetic wave to the modem processor for demodulation. The mobile communication module 402A may further amplify a signal modulated by the modem processor, and convert the signal into an electromagnetic wave through the antenna x for radiation. In some embodiments, at least some functional modules of the mobile communication module 402A may be disposed in the processor 401. In some embodiments, at least some functional modules of the mobile communication module 402A and at least some modules of the processor 401 may be disposed in a same component.

The modem processor may include a modulator and a demodulator. The modulator is configured to modulate a to-be-sent low-frequency baseband signal into a medium and high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to an application processor. The application processor outputs a sound signal by using an audio device (which is not limited to a speaker 406A, a phone receiver 406B, or the like), or displays an image or a video stream by using the display screen 403. In some embodiments, the modem processor may be an independent component. In some other embodiments, the modem processor may be independent of the processor 401, and is disposed in a same component as the mobile communication module 402A or another functional module.

The wireless communication module 402B can provide a solution for wireless communication including a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication technology (near field communication, NFC), an infrared technology (infrared, IR) and the like to be applied to the electronic device 400. The wireless communication module 402B may be one or more components integrating at least one communication processing module. The wireless communication module 402B receives an electromagnetic wave through the antenna y, performs frequency modulation and filtering processing on the electromagnetic wave signal, and sends the processed signal to the processor 401. The wireless communication module 402B may further receive a to-be-sent signal from the processor 401, perform frequency modulation and amplification on the to-be-sent signal, and convert the signal into an electromagnetic wave through the antenna y for radiation.

In some embodiments, the antenna x and the mobile communication module 402A of the electronic device 400 are coupled, and the antenna y and the wireless communication module 402B are coupled, so that the electronic device 400 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

As shown in FIG. 4, in some implementations, the electronic device 400 may further include an external memory interface 410, an internal memory 404, a universal serial bus (universal serial bus, USB) interface 411, a charging management module 412, a power management module 413, a battery 414, an audio module 406, a speaker 406A, a phone receiver 406B, a microphone 406C, a headset jack 406D, a sensor module 405, a button 409, a motor, an indicator 408, a camera 407, a subscriber identification module (subscriber identification module, SIM) card interface, and the like.

The charging management module 412 is configured to receive a charging input from a charger. The charger may be a wireless charger or a wired charger. In some embodiments of wired charging, the charging management module 412 may receive a charging input from the wired charger through the USB interface 411. In some embodiments of wireless charging, the charging management module 412 may receive wireless charging input through a wireless charging coil of the electronic device 400. When charging the battery 414, the charging management module 412 may further supply power to the electronic device 400 by using the power management module 413.

The power management module 413 is configured to connect to the battery 414, the charging management module 412, and the processor 401. The power management module 413 receives an input of the battery 414 and/or the charging management module 412, to supply power to the processor 401, the internal memory 404, an external memory, the display screen 403, the camera 407, the wireless communication module 402B, and the like. The power management module 413 may be further configured to monitor parameters such as a capacity of the battery 414, a cycle count of the battery 414, and a state of health (leakage and impedance) of the battery 414. In some other embodiments, the power management module 413 may alternatively be disposed in the processor 401. In some other embodiments, the power management module 413 and the charging management module 412 may alternatively be disposed in a same component.

The external memory interface 410 may be configured to connect to an external storage card such as a micro SD card, to expand a storage capability of the electronic device 400. The external memory card communicates with the processor 401 through the external memory interface 410, to implement a data storage function. For example, files such as music and a video stream are stored in the external storage card.

The internal memory 404 may be configured to store computer-executable program code. The executable program code includes instructions. The processor 401 runs the instructions stored in the internal memory 404, to perform various function applications and data processing of the electronic device 400.

The electronic device 400 may implement an audio function, for example, music playing and recording, through the audio module 406, the speaker 406A, the phone receiver 406B, the microphone 406C, the headset jack 406D, the application processor 401.

The button 409 includes a power button, a volume button, and the like. The button 409 may be a mechanical button 409, or may be a touch button 409. The electronic device 400 may receive a button 409 input, and generate a button signal input related to user setting and function control of the electronic device 400.

The indicator 408 may be an indicator light, and may be configured to indicate a charging status and a power change, or may be configured to indicate a message, a missed call, a notification, and the like.

The SIM card interface is configured to connect to a SIM card. The SIM card may be inserted into the SIM card interface or unplugged from the SIM card interface, to come into contact with or be separated from the electronic device 400. The electronic device 400 may support one or N SIM card interfaces, where N is a positive integer greater than 1. The SIM card interface may support a Nano SIM card, a Micro SIM card, a SIM card, and the like. A plurality of cards may be simultaneously inserted into the same SIM card interface. Types of the plurality of cards may be the same or different. The SIM card interface may also be compatible with different types of SIM cards. The SIM card interface may also be compatible with an external storage card. The electronic device 400 interacts with a network through the SIM card, to implement functions such as conversation and data communication. In some embodiments, the electronic device 400 uses an eSIM, that is, an embedded SIM card. The eSIM card may be embedded into the electronic device 400, and cannot be separated from the electronic device 400.

A sensor module 405 in the electronic device 400 may include a touch sensor, a pressure sensor, a gyroscope sensor, a barometric pressure sensor, a magnetic sensor, an acceleration sensor, a distance sensor, a proximity light sensor, an ambient light sensor, a fingerprint sensor, a temperature sensor, a bone conduction sensor, and the like, to implement sensing and/or obtaining functions of different signals.

The multiplexer and the electronic device applied in the radio frequency module provided in embodiments of this application are described above. It should be understood that an example structure in this embodiment does not constitute a specific limitation on the electronic device 400. In some other embodiments, the electronic device 400 may include more or fewer components than those shown in the figure, or some components may be combined, or some components may be split, or different component arrangements may be used. The components shown in the figure may be implemented by hardware, software, or a combination of software and hardware.

The multiplexer provided in embodiments of this application is described below. It is to be noted that the multiplexer is configured to transmit a first signal and a second signal. The first signal is a signal in a time-division duplex frequency band, and the second signal is a signal in a frequency-division duplex frequency band.

In embodiments of this application, the first signal may be a high frequency signal in the time-division duplex frequency band, namely, a signal with a frequency ranging from 2.2 GHz to 2.7 GHz, for example, N41 and N40. The second signal may be an intermediate frequency signal in the frequency-division duplex frequency band, namely, a signal with a frequency ranging from 1.7 GHz to 2.2 GHz, for example, B1 and B3.

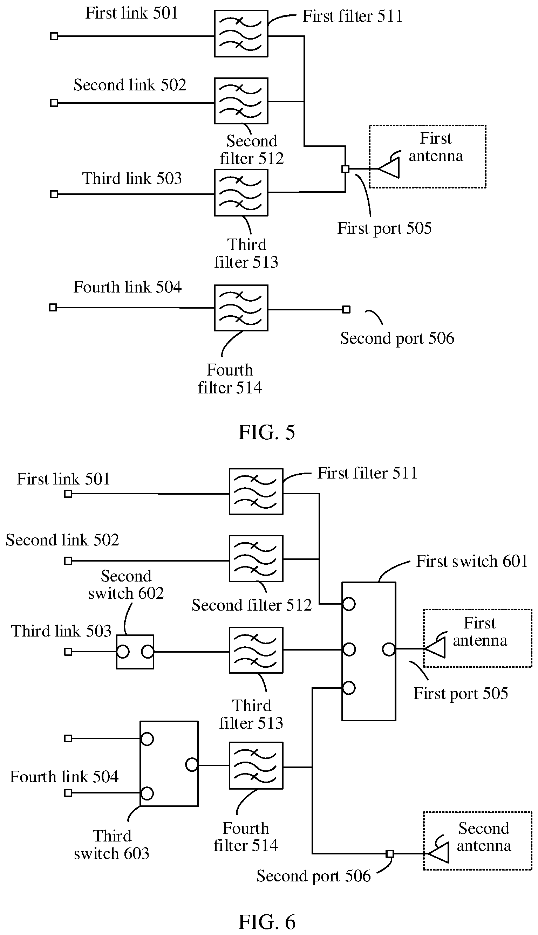

FIG. 5 is a schematic diagram of a multiplexer according to an embodiment of this application. As shown in FIG. 5, the multiplexer includes: a first link 501, a second link 502, a third link 503, and a fourth link 504. In embodiments of this application, a link may refer to a radio frequency path, and the link may include a filter, a switch, a power amplifier, a low noise amplifier, and the like.

The first link 501 includes a first filter 511. A passband of the first filter 511 is an uplink frequency band of a second signal. In other words, an uplink signal of the second signal can pass through the first filter 511, but a signal in another frequency band other than the uplink signal of the second signal cannot pass through the first filter 511. The uplink signal of the second signal refers to a signal in a range of the uplink frequency band of the second signal. For example, if the second signal is a signal in a B1 frequency band, the uplink frequency band of the second signal refers to a signal in a range of 1920 MHz to 1980 MHz.

The second link 502 includes a second filter 512. A passband of the second filter 512 is a downlink frequency band of the second signal. In other words, a downlink signal of the second signal can pass through the second filter 512, but a signal in another frequency band other than the downlink signal of the second signal cannot pass through the second filter 512. The downlink signal of the second signal refers to a signal in a range of the downlink frequency band of the second signal. For example, if the second signal is the signal in the B1 frequency band, the downlink frequency band of the second signal refers to a signal in a range of 2110 MHz to 2170 MHz.

Both the first link 501 and the second link 502 work on a first antenna through a first port 505; the first link 501 is used to send the second signal; and the second link 502 is used to receive the second signal. In embodiments of this application, that the first link 501 works on the first antenna through the first port 505 means that the first link 501 sends a radio frequency signal to the first antenna through the first port 505, to cause the first antenna to transmit the radio frequency signal; and that the second link 502 works on the first antenna through the first port 505 means that the second link 502 receives the radio frequency signal received by the first antenna through the first port 505. In other words, the first link 501 sends the uplink signal of the second signal to the first antenna through the first port 505, to cause the second antenna to transmit the uplink signal of the second signal. That the second link 502 works on the first antenna through the first port 505 means that the second link 502 receives the downlink signal of the second signal received by the first antenna through the first port 505.

The third link 503 includes a third filter 513; the fourth link 504 includes a fourth filter 514; and a passband of the third filter 513 and a passband of the fourth filter 514 are frequency bands covered by a first signal. As mentioned above, the passband of the third filter 513 and the passband of the fourth filter 514 are the frequency bands covered by the first signal, so that the first signal can pass through the third filter 513 and the fourth filter 514, but a signal in another frequency band other than the first signal cannot pass through the third filter 513 and the fourth filter 514. For example, if the first signal is a signal in an N41 frequency band, both the third filter 513 and the fourth filter 514 enable only the signal in the N41 frequency band to pass, and do not enable the signal in another frequency band such as B1 or B3 to pass.

It is to be noted that because the first signal is the signal in the time-division duplex frequency band, and uplink and downlink of the signal are performed in a time-sharing manner, a frequency range of an uplink signal and a frequency range of a downlink signal are the same, and no distinction is made.

Uplink and downlink of the first signal are performed in a time-sharing manner. An uplink stage may be referred to as a transmission slot, and a downlink stage may be referred to as a receiving slot. Details are not described again subsequently. A working state of the multiplexer when the first signal is in the transmission slot and the receiving slot is described below.

In the transmission slot of the first signal, the third link 503 is connected to the first port 505, and the third link 503 does not work; and the fourth link 504 sends the first signal through a second port 506, and the second port 506 is different from the first port 505.

In embodiments of this application, that the third link 503 is connected to the first port 505 means that the third link 503 is electrically connected to the first port 505. It may be understood that because the third link 503 includes the third filter 513, the third filter 513 is also connected to the first port 505.

That the third link 503 does not work means that the third link 503 is disconnected, and does not perform signal transmission. For example, that the third link 503 does not work may mean that one end of the third link 503 is connected to the first port 505, and an other end of the third link 503 is disconnected.

The fourth link 504 is connected to the second port 506, to send the first signal through the second port 506, and the second port 506 is different from the first port 505. In other words, the fourth link 504 does not work at the first port 505, and impedance of the first port 505 is not affected by the fourth link 504.

In other words, in the transmission slot of the first signal, filters that are connected to the first port 505 include the first filter 511 in the first link 501, the second filter 512 in the second link 502, and the third filter 513 in the third link 503. The impedance of the first port 505 is determined by the first filter 511, the second filter 512, and the third filter 513.

In the receiving slot of the first signal, the third link 503 works on the first antenna through the first port 505, to perform primary MIMO receiving of the first signal; and the fourth link 504 performs primary receiving of the first signal through the second port 506.

That the third link 503 works on the first antenna through the first port 505 means that the third link 503 is connected to the first port 505, and performs primary MIMO receiving of the first signal through the first port 505 and the first antenna. That the fourth link 504 performs primary receiving of the first signal through the second port 506 means that the fourth link 504 is connected to the second port 506 and performs primary receiving of the first signal through the second port 506. Because the first port 505 is different from the second port 506, the fourth link 504 does not affect the impedance of the first port 505.

It may be learnt that in the receiving slot of the first signal, the impedance of the first port 505 is also determined by the first filter 511, the second filter 512, and the third filter 513.

In other words, according to the multiplexer provided in embodiments of this application, when the first signal is switched between the transmission slot and the receiving slot, impedance of an output port of the second signal, that is, the impedance of the first port, does not change. Therefore, a gain and a phase of the second signal do not change, thereby ensuring that a throughput rate of the second signal is not affected. In addition, a signal transmission path of the first signal is the same as a primary receiving path of the first signal, which does not violate a software constraint of a platform, and has good versatility.

A specific implementation of the multiplexer is described below, and the multiplexer is simulated to verify the foregoing conclusion.

FIG. 6 is a schematic diagram of still another multiplexer according to an embodiment of this application. As shown in FIG. 6, the first link 501 in the multiplexer includes the first filter 511 and a first switch 601; the second link 502 includes the second filter 512 and the first switch 601; the third link 503 includes a second switch 602, the third filter 513, and the first switch 601; and the fourth link 504 includes a third switch 603 and the fourth filter 514.

One end of the first filter 511 is connected to the first switch 601, and an other end of the first filter 511 may be connected to a signal source of the second signal. The signal source refers to an output of a corresponding PA. The following are the same and are not repeated. In other words, the first link 501 is an uplink channel (TX) of the second signal, and is used to send the uplink signal of the second signal to the first antenna.

In embodiments of this application, the signal source of the second signal may be used to output the uplink signal of the second signal. Specifically, the signal source of the second signal may be used to output the uplink signal of the second signal through a power amplifier (Power Amplifier, PA), to modulate the uplink signal of the second signal to a sufficient radio frequency power.

One end of the second filter 512 is connected to the first switch 601, and an other end of the second filter 512 may be connected to a receiving port of the second signal. In other words, the second link 502 is a downlink channel (RX) of the second signal, and is used to receive the downlink signal of the second signal received by the first antenna.

In embodiments of this application, the receiving port of the second signal may receive the downlink signal of the second signal through a low noise amplifier (Low Noise Amplifier, LNA), to suppress noise, and improve receiving sensitivity.

One end of the second switch 602 is connected to a primary MIMO receiving port of the first signal, and an other end of the second switch 602 is connected to the first switch 601 through the third filter 513. In other words, the third link 503 is a primary MIMO receive channel of the first signal, and is used to perform primary MIMO receiving of the first signal.

In embodiments of this application, the primary MIMO receiving port of the first signal may also receive a primary MIMO signal of the first signal through the LNA, to suppress noise.

The third switch 603 is separately connected to a signal source of the first signal, a primary receiving port, and the fourth filter 514. The fourth filter 514 is further connected to a second port 506. The second port 506 is further connected to a second antenna. The fourth link 504 transmits the first signal or performs primary receiving of the first signal through the second antenna.

In embodiments of this application, the signal source of the first signal may be used to output the first signal through the PA, to modulate the first signal to a sufficient radio frequency power. The primary receiving port of the first signal may perform primary receiving of the first signal through the LNA, to suppress noise.

In a transmission slot of the first signal, the first switch 601 connects the first filter 511, the second filter 512, and the third filter 513 to the first port 505. The second switch 602 is turned off. The third switch 603 connects the signal source of the first signal to the fourth filter 514, and disconnects the primary receiving port of the first signal from the fourth filter 514. In this way, the first link 501 transmits the uplink signal of the second signal from the signal source of the second signal to the first antenna. The second link 502 transmits the downlink signal of the second signal from the first antenna to the receiving port of the second signal. The third filter 513 in the third link 503 is connected to the first port 505, but does not work. The fourth link 504 transmits the first signal from the signal source of the first signal to the second antenna.

It may be understood that in the transmission slot of the first switch 601, filters that are connected to the first port 505 include the first filter 511, the second filter 512, and the third filter 513.

In a receiving slot of the first signal, the first switch 601 connects the first filter 511, the second filter 512, and the third filter 513 to the first port 505. The second switch 602 is turned on, to connect the primary MIMO receiving port of the first signal to the third filter 513. The third switch 603 connects the primary receiving port of the first signal to the fourth filter 514, and disconnects the signal source of the first signal from the fourth filter 514. In this way, the first link 501 transmits the uplink signal of the second signal from the signal source of the second signal to the first antenna. The second link 502 transmits the downlink signal of the second signal from the first antenna to the receiving port of the second signal. The third filter 513 in the third link 503 is connected to the first port 505, and transmits the primary MIMO signal of the first signal from the first antenna to the primary MIMO receiving port of the first signal. The fourth link 504 transmits the first signal from the second antenna to the primary receiving port of the first signal.

It may be learnt that in the receiving slot of the first signal, filters that are connected to the first port 505 are still the first filter 511, the second filter 512, and the third filter 513. The filters that are connected to the first port 505 do not change compared with that in the transmission slot of the first signal. Therefore, the impedance of the first port 505 does not change.

The following describes through simulation that the gain and the phase of the second signal do not change in the receiving slot of the first signal and in the transmission slot of the first signal, to prove that the impedance of the first port does not change.

In the following simulation, the first signal is a signal in an N41 frequency band, and the second signal is a signal in a B3 frequency band. It is easy to understand that a passband of the first filter is an uplink frequency band of B3. A passband of the second filter is a downlink frequency band of B3. A passband of the third filter and a passband of the fourth filter are the N41 frequency band.

First, it is described that in a receiving slot and a transmission slot of N41, a gain of a B3 uplink signal does not change.

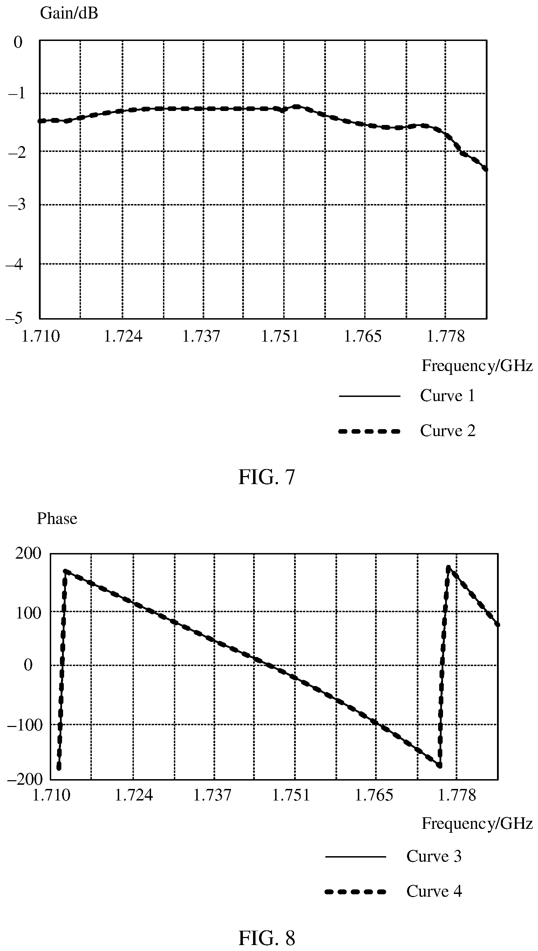

FIG. 7 is a schematic diagram of gain curves of a B3 uplink signal according to an embodiment of this application. In FIG. 7, there are a curve 1 and a curve 2. The curve 1 is a gain curve of the B3 uplink signal when N41 is in a receiving slot, and the curve 2 is a gain curve of the B3 uplink signal when N41 is in a transmission slot. It may be learnt that the curve 1 coincides with the curve 2.

Based on FIG. 7, it may be understood that when N41 is in the receiving slot and the transmission slot, and the gain curves of the B3 uplink signal do not change. In other words, when N41 is switched between the receiving slot and the transmission slot, the gain of the B3 uplink signal is not affected.

Next, it is described that in the receiving slot and the transmission slot of N41, a phase of the B3 uplink signal does not change.

FIG. 8 is a schematic diagram of phase curves of a B3 uplink signal according to an embodiment of this application. In FIG. 8, there are a curve 3 and a curve 4. The curve 3 is a phase curve of the B3 uplink signal when N41 is in the receiving slot, and the curve 4 is a phase curve of the B3 uplink signal when N41 is in the transmission slot. It may be learnt that the curve 3 coincides with the curve 4.

Based on FIG. 8, it may be understood that when N41 is in the receiving slot and the transmission slot, the phase curves of the B3 uplink signal do not change. In other words, when N41 is switched between the receiving slot and the transmission slot, the phase of the B3 uplink signal is not affected.

Next, it is described that in the receiving slot and the transmission slot of N41, a gain of a B3 downlink signal does not change.

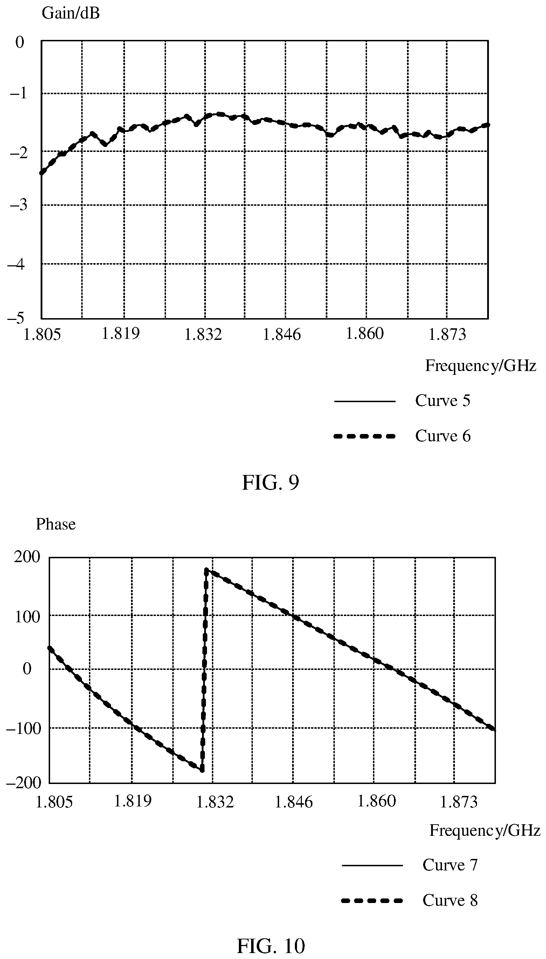

FIG. 9 is a schematic diagram of gain curves of a B3 downlink signal according to an embodiment of this application. In FIG. 9, there are a curve 5 and a curve 6. The curve 5 is a gain curve of the B3 downlink signal when N41 is in the receiving slot, and the curve 6 is a gain curve of the B3 downlink signal when N41 is in the transmission slot. It may be learnt that the curve 5 coincides with the curve 6.

Based on FIG. 9, it may be understood that when N41 is in the receiving slot and the transmission slot, the gain curves of the B3 downlink signal do not change. In other words, when N41 is switched between the receiving slot and the transmission slot, the gain of the B3 downlink signal is not affected.

Finally, it is described that in the receiving slot and the transmission slot of N41, a phase of the B3 downlink signal does not change.

FIG. 10 is a schematic diagram of phase curves of a B3 downlink signal according to an embodiment of this application. In FIG. 10, there are a curve 7 and a curve 8. The curve 7 is a phase curve of the B3 downlink signal when N41 is in the receiving slot, and the curve 8 is a phase curve of the B3 downlink signal when N41 is in the transmission slot. The two curves coincide with each other

Based on FIG. 10, it may be understood that when N41 is in the receiving slot and the transmission slot, and the phase curves of the B3 downlink signal do not change. In other words, when N41 is switched between the receiving slot and the transmission slot, the phase of the B3 downlink signal is not affected.

According to FIG. 7 to FIG. 10, it may be determined that switching of N41 between the receiving slot and the transmission slot does not affect the gain and the phase of B3. Therefore, when N41 is switched between the receiving slot and the transmission slot, the impedance of the first port does not change.

Based on the foregoing simulation, it may be proved that according to the multiplexer provided in embodiments of this application, when the first signal is switched between the transmission slot and the receiving slot, impedance of an output port of the second signal, that is, the impedance of the first port, does not change. Therefore, a gain and a phase of the second signal do not change. In this way, it is ensured that a throughput rate of the second signal is not affected.

It should be supplemented that in embodiments of this application, the first signal is the signal in the time-division duplex frequency band, and multi-path receiving may be performed on the first signal. In addition to the primary receiving and the primary MIMO receiving, the multi-path receiving may further include diversity receiving and diversity MIMO receiving.

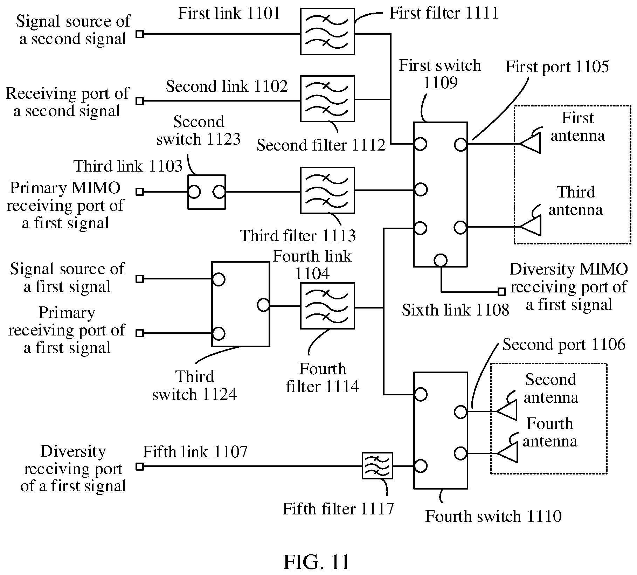

For example, FIG. 11 is a schematic diagram of still another multiplexer according to an embodiment of this application. As shown in FIG. 11, the multiplexer includes a first link 1101, a second link 1102, a third link 1103, a fourth link 1104, a fifth link 1107, and a sixth link 1108.

The first link 1101 includes a first filter 1111 and a first switch 1109. One end of the first filter 1111 is connected to a signal source of a second signal, and an other end of the first filter 1111 is connected to the first switch 1109. The first switch 1109 is further connected to a first antenna through a first port 1105.

The second link 1102 includes a second filter 1112 and the first switch 1109. One end of the second filter 1112 is connected to a receiving port of the second signal, and an other end of the second filter 1112 is connected to the first switch 1109.

The third link 1103 includes a third filter 1113, a second switch 1123, and the first switch 1109. One end of the second switch 1123 is connected to a primary MIMO receiving port of the first signal, and an other end of the second switch 1123 is connected to the first switch 1109 through the third filter 1113.

The fourth link 1104 includes a third switch 1124, a fourth filter 1114, and a fourth switch 1110. The third switch 1124 is separately connected to a signal source of a first signal, a primary receiving port of the first signal, and the fourth filter 1114. The fourth filter 1114 is further connected to the fourth switch 1110. The fourth switch 1110 is further connected to a second antenna through a second port 1106.

The fifth link 1107 includes a fifth filter 1117 and the fourth switch 1110. One end of the fifth filter 1117 is connected to a diversity receiving port of the first signal, and an other end of the fifth filter 1117 is connected to the fourth switch 1110. The fourth switch 1110 is further connected to a fourth antenna. In embodiments of this application, a connection port between the fourth switch and the fourth antenna may be referred to as a third port.

The sixth link 1108 includes the first switch 1109. The first switch 1109 is further separately connected to a diversity MIMO receiving port of the first signal and a third antenna. In embodiments of this application, a connection port between the first switch and the third antenna may be referred to as a fourth port. The diversity MIMO receiving port of the first signal may also be used as a diversity receiving port of the second signal.

The first link 1101 is an uplink channel (TX) of the second signal. The second link 1102 is a downlink channel (RX) of the second signal. The third link 1103 is a primary MIMO receive channel of the first signal. The fourth link 1104 may be divided into two sub-links. One of the two sub-links is a transmit channel of the first signal, and an other of the two sub-links is a primary receive channel of the first signal. The fifth link 1107 is a diversity receive channel of the first signal. The sixth link 1108 is a diversity MIMO receive channel of the first signal, and is also a diversity receive channel of the second signal.

In other words, transmission of the first signal is performed through the transmit channel of the first signal in the fourth link 1104. Receiving of the first signal is performed through the primary receive channel in the fourth link 1104, the third link 1103, the fifth link 1107, and the sixth link 1108 to implement four-path receiving. Transmission of the second signal is performed through the first link 1101, and receiving of the second signal is performed through the second link 1102 and the sixth link 1108 to implement dual-stream receiving. It should be understood that signal receiving efficiency can be greatly improved in this way.

It may be learnt that in a process of performing transmission and four-path receiving of the first signal, the transmit channel and the primary receive channel share a path (path), which can meet a software constraint of a platform and has good versatility.

The multiplexer provided in embodiments of this application may further include links of a plurality of FDD frequency bands that are connected to the first switch. For example,

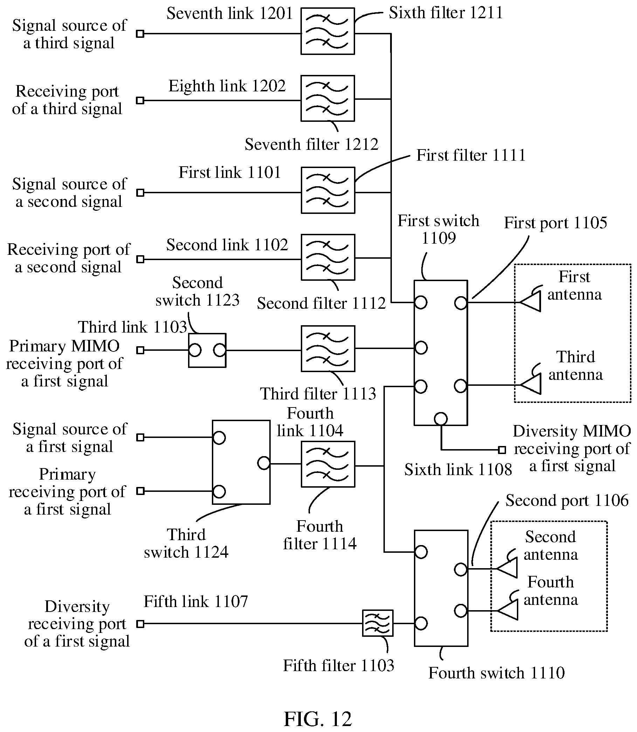

FIG. 12 is a schematic diagram of still another multiplexer according to an embodiment of this application. Compared with the multiplexer shown in FIG. 11, the multiplexer shown in FIG. 12 further includes a seventh link 1201 and an eighth link 1202.

The seventh link 1201 includes a sixth filter 1211 and the first switch 1109. One end of the sixth filter 1211 is connected to a signal source of a third signal, and an other end of the sixth filter 1211 is connected to the first switch 1109. A passband of the sixth filter 1211 is an uplink frequency band of the third signal. The third signal is a signal in an FDD frequency band.

The eighth link 1202 includes a seventh filter 1212 and the first switch 1109. One end of the seventh filter 1212 is connected to a receiving port of the third signal, and an other end of the seventh filter 1212 is connected to the first switch 1109. A passband of the seventh filter 1212 is a downlink frequency band of the third signal.

The first switch 1109 may connect the sixth filter 1211 and the seventh filter 1212 to a first port, to connect the sixth filter 1211 and a first antenna, and connect the seventh filter 1212 and the first antenna.

In the transmission slot of the first signal, filters that are connected to the first port 1105 include the first filter 1111, the second filter 1112, the third filter 1113, the sixth filter 1211, and the seventh filter 1212. In the receiving slot of the first signal, filters that are connected to the first port 1105 are also the foregoing five filters. Therefore, when the transmission slot and the receiving slot of the first signal are switched, impedance of the first port 1105 does not change.

By disposing the seventh link and the eighth link, ENDC between the second signal and the first signal and ENDC between the third signal and the first signal may be implemented by switching the first switch. For example, the first signal is a signal in an N40 frequency band, the second signal is a signal in a B1 frequency band, and the third signal is a signal in a B3 frequency band. Then the multiplexer shown in FIG. 12 may implement ENDC of N40+B 1, and may also implement ENDC of N40+B3.

It should be understood that the first switch may be further connected to a link in another FDD frequency band and a link in a TDD frequency band, to implement ENDC of signals in a plurality of frequency bands. For example, at least one filter together with the first filter 1111, the second filter 1112, the seventh filter 1212, and the sixth filter 1211 may alternatively be connected to the first switch 1109 to form a pentaplexer, a hexaplexer, and the like. This is not limited in embodiments of this application.

The multiplexer provided in embodiments of this application is described above. Based on the foregoing description, a radio frequency module provided in embodiments of this application is introduced below. The radio frequency module includes the multiplexer introduced in FIG. 6.

It should be understood that the multiplexer included in the radio frequency module may be the multiplexer in any one of the foregoing embodiments. Only the multiplexer shown in FIG. 11 is used as an example. This does not represent that this application is limited thereto.

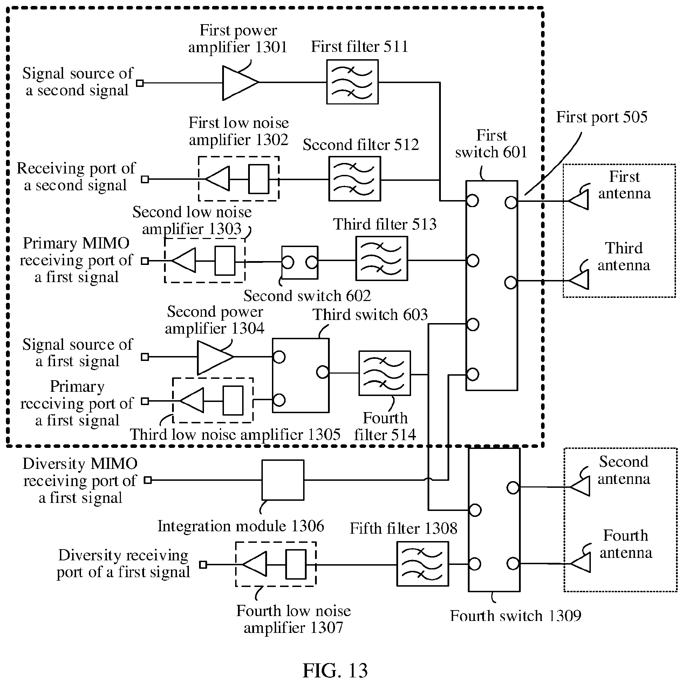

FIG. 13 is a schematic diagram of a radio frequency module according to an embodiment of this application. As shown in FIG. 13, a part in a bold dashed box is the radio frequency module provided in embodiments of this application. The radio frequency module includes the multiplexer shown in FIG. 6, a first power amplifier 1301, a second power amplifier 1304, a first low noise amplifier 1302, a second low noise amplifier 1303, and a third low noise amplifier 1305.

The first filter 511 in the multiplexer is connected to the signal source of the second signal through the first power amplifier 1301.

The second filter 512 in the multiplexer is connected to the receiving port of the second signal through the first low noise amplifier 1302.

The third filter 513 in the multiplexer sequentially passes through the second switch 602, and the second low noise amplifier 1303 is connected to the primary MIMO receiving port of the first signal.

The third switch 603 in the multiplexer is connected to the signal source of the first signal through the second power amplifier 1304. The third switch 603 is further connected to the primary receiving port of the first signal through the third low noise amplifier 1305.

In embodiments of this application, the first power amplifier 1301 and the second power amplifier 1304 are configured to amplify a radio frequency power of a corresponding signal. For example, the first power amplifier 1301 is configured to amplify a radio frequency power of an uplink signal of the second signal, and the second power amplifier 1304 is configured to amplify a radio frequency power of the first signal.

The first low noise amplifier 1302, the second low noise amplifier 1303, the third low noise amplifier 1305, and the fourth low noise amplifier 1307 are configured to suppress noise in a corresponding signal. For example, the second low noise amplifier 1303 is configured to suppress noise in a primary MIMO signal of the first signal, and the third low noise amplifier 1305 is configured to suppress noise in a primary signal of the first signal.

It should be supplemented that the radio frequency module provided in embodiments of this application may further include more filters. The filters are connected to the first switch 601 together with the first filter 511 and the second filter 512, to form a quadruplexer, a hexaplexer, and the like. This is not limited in this application, and details are not described again subsequently.

The radio frequency module provided in embodiments of this application may be connected to some external components. For example, as shown in FIG. 13, the external components may include an integration module 1306, a fourth low noise amplifier 1307, a fifth filter 1308, and a fourth switch 1309.

The integration module 1306 is separately connected to the first switch 601 and a diversity MIMO receiving port of the first signal.

One end of the fifth filter 1308 is connected to the fourth switch 1309, and an other end of the fifth filter 1308 is connected to a diversity receiving port of the first signal through the fourth low noise amplifier 1307.

The fourth switch is further separately connected to the fourth filter 514, a second antenna, and a fourth antenna.

The fourth low noise amplifier 1307 is configured to suppress noise in a diversity signal of the first signal.

The integration module 1306 may integrate modules of components such as a low noise amplifier and a filter of the first signal. The integration module 1306 is configured to perform processing such as filtering and noise suppression on a diversity MIMO signal of the first signal. In embodiments of this application, the integration module 1306 may be an L-PAMID.

A working principle of the communication module is described below. First, the working principle of the communication module when the first signal is in the transmission slot is described.

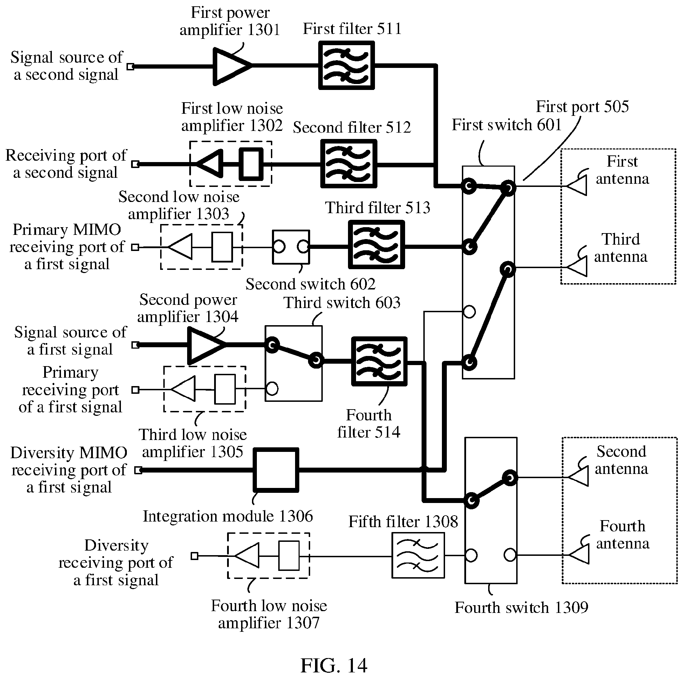

FIG. 14 is a schematic diagram of working of a communication module according to an embodiment of this application.

As shown in FIG. 14, in the transmission slot of the first signal, the first switch 601 is configured to connect the first filter 511, the second filter 512, and the third filter 513 to the first antenna; The first switch is further configured to connect the third antenna to the integration module 1306; the second switch 602 is turned off; the third switch 603 is configured to connect the second power amplifier 1304 to the fourth filter 514; and the fourth switch 1309 is configured to connect the fourth filter 514 to the second antenna.

After being output from the signal source of the second signal, the uplink signal of the second signal sequentially passes through the first power amplifier 1301, the first filter 511, and the first switch 601 to the first antenna, and is transmitted by the first antenna.

After being received by the first antenna, the downlink signal of the second signal sequentially passes through the first switch 601, the second filter 512, and the first low noise amplifier 1302 to the receiving port of the second signal, to complete receiving of the downlink signal of the second signal.

After being received by the third antenna, a diversity downlink signal of the second signal sequentially passes through the first switch 601 and the integration module 1306 to a diversity receiving port (which is not marked in FIG. 14) of the second signal, to complete diversity receiving of the downlink signal of the second signal.

The third filter 513 is connected to the first port 505, but because the second switch 602 is turned off, no signal is transmitted from the third filter 513 to the primary MIMO receiving port of the first signal.

After being sent by the signal source of the first signal, the first signal sequentially passes through the second power amplifier 1304, the third switch 603, the fourth filter 514, and the fourth switch 1309 to the second antenna, and is transmitted by the second antenna.

It may be learnt that filters that are connected to the first port 505 are the first filter 511, the second filter 512, and the third filter 513.

The working principle of the communication module when the first signal is in the receiving slot is described below.

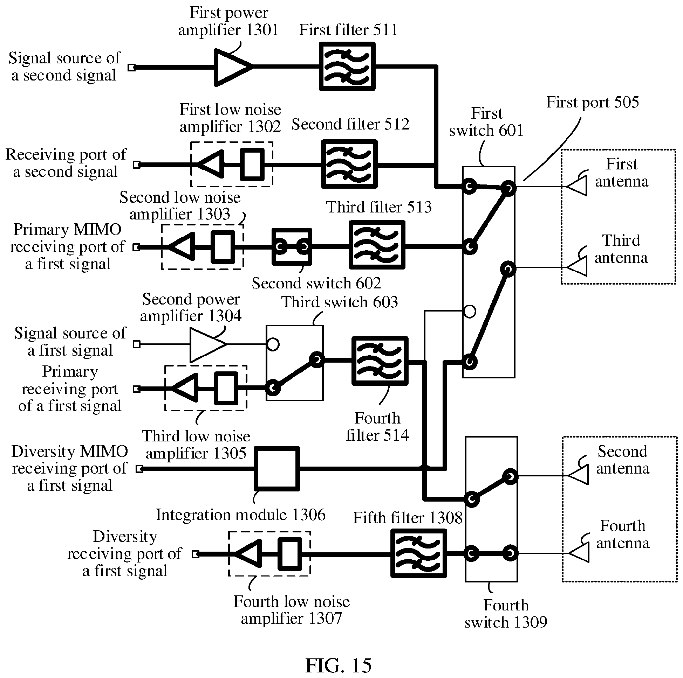

FIG. 15 is a schematic diagram of working of still another communication module according to an embodiment of this application.

As shown in FIG. 15, in the receiving slot of the first signal, the first switch 601 is configured to connect the first filter 511, the second filter 512, and the third filter 513 to the first antenna, and connect the integration module 1306 to the third antenna; the second switch 602 is configured to connect the third filter 513 to the second low noise amplifier 1303; the third switch 603 is configured to connect the third low noise amplifier 1305 to the fourth filter 514; and the fourth switch 1309 is configured to connect the fourth filter 514 to the second antenna, and connect the fifth filter 1308 to the fourth antenna.

After being output from the signal source of the second signal, the uplink signal of the second signal sequentially passes through the first power amplifier 1301, the first filter 511, and the first switch 601 to the first antenna, and is transmitted by the first antenna.

After being received by the first antenna, the downlink signal of the second signal sequentially passes through the first switch 601, the second filter 512, and the first low noise amplifier 1302 to the receiving port of the second signal, to complete receiving of the downlink signal of the second signal.

After being received by the third antenna, a diversity downlink signal of the second signal sequentially passes through the first switch 601 and the integration module 1306 to a diversity receiving port (which is not marked in FIG. 15) of the second signal, to complete diversity receiving of the downlink signal of the second signal.

After being received by the second antenna, a primary signal of the first signal sequentially passes through the fourth switch 1309, the fourth filter 514, the third switch 603, and the third low noise amplifier 1305 to the primary receiving interface of the first signal, to complete receiving.

After being received by the fourth antenna, a diversity signal of the first signal sequentially passes through the fourth switch 1309, the fifth filter 1308, and the fourth low noise amplifier 1307 to the diversity receiving port of the first signal, to complete receiving.

After being received by the first antenna, the primary MIMO signal of the first signal sequentially passes through the first switch 601, the third filter 513, the second switch 602, and the second low noise amplifier 1303 to the primary MIMO receiving port of the first signal, to complete receiving.

After being received by the third antenna, the diversity MIMO signal of the first signal sequentially passes through the first switch 601 and the integration module 1306 to the diversity MIMO receiving port of the first signal, to complete receiving.

In this way, four-path receiving of the first signal may be implemented.

It may be learnt that filters that are connected to the first port 505 are still the first filter 511, the second filter 512, and the third filter 513. In addition, a sending path of the first signal is the same as a primary receiving path of the first signal.

Therefore, according to the radio frequency module provided in embodiments of this application, when the first signal is switched between the transmission slot and the receiving slot, impedance of an output port of the second signal, that is, the impedance of the first port 505, does not change. Therefore, a gain and a phase of the second signal do not change. In this way, it is ensured that a throughput rate of the second signal is not affected. In addition, the sending path of the first signal is the same as the primary receiving path of the first signal, which can meet a software constraint of a platform, and has good versatility.

It should be supplemented that in the multiplexer and the radio frequency module provided in embodiments of this application, the fourth filter 514 may be further connected to the first switch 601, to transmit a sounding reference signal (Sounding Reference Signal, SRS) in turn on the four antennas in the ENDC scenario, that is, to implement 1T4R of the first signal. A detailed description is provided below.

When the SRS is sent through the second antenna, a working state of the radio frequency module is the same as that in FIG. 14. Details are not described herein again.

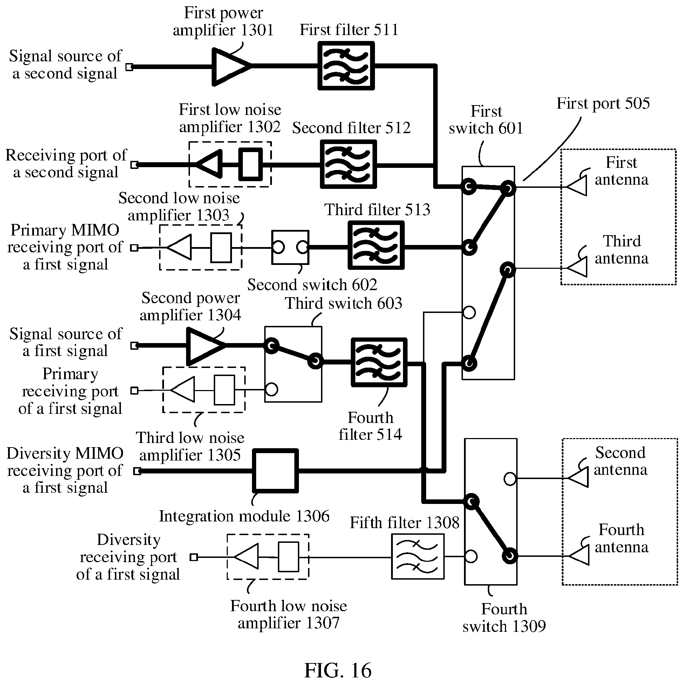

When the SRS is sent through the fourth antenna, a working state of the radio frequency module is the same as that in FIG. 16. FIG. 16 is a schematic diagram of working of still another radio frequency module according to an embodiment of this application. It may be learnt that the first switch 601 connects the first filter 511, the second filter 512, and the third filter 513 to the first antenna, and connects the third antenna to the integration module 1306; the second switch 602 is turned off; the third switch 603 connects the second power amplifier 1304 to the fourth filter 514; and the fourth switch 1309 connects the fourth filter 514 to the fourth antenna.

The SRS is sent by the signal source of the first signal, sequentially passes through the second power amplifier 1304, the third switch 603, the fourth filter 514, the fourth switch 1309, and the fourth antenna, and is transmitted by the fourth antenna.

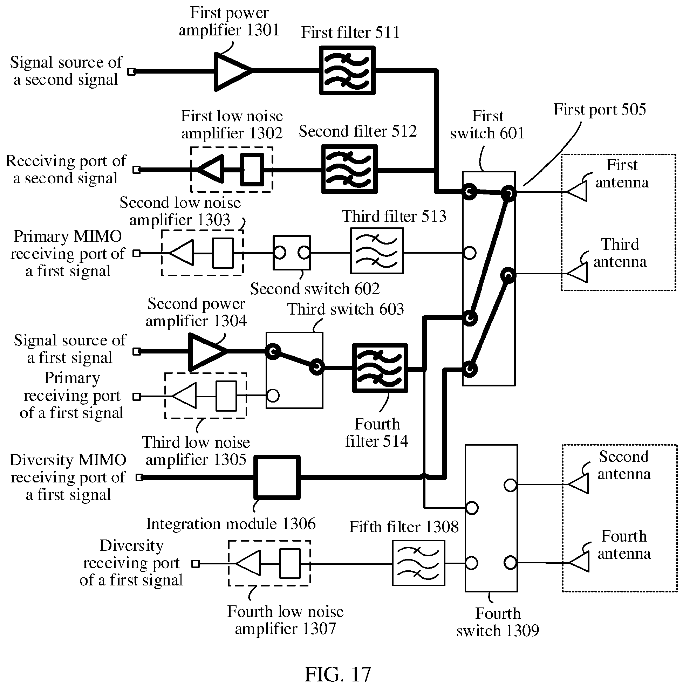

When the SRS is sent through the first antenna, a working state of the radio frequency module is the same as that in FIG. 17. FIG. 17 is a schematic diagram of working of still another radio frequency module according to an embodiment of this application. It may be learnt that the first switch 601 connects the first filter 511, the second filter 512, and the fourth filter 514 to the first antenna, and connects the third antenna to the integration module 1306. The second switch 602 is turned off; the third switch 603 connects the second power amplifier 1304 to the fourth filter 514; and the fourth switch 1309 is turned off.

It should be noted that when the SRS is sent through the first antenna, the third filter 513 needs to be disconnected from the first antenna, to prevent two filters (the third filter 513 and the fourth filter 514) of the first signal from being connected in parallel and affecting normal working of the radio frequency module.

The SRS is sent by the signal source of the first signal, sequentially passes through the second power amplifier 1304, the third switch 603, the fourth filter 514, the first switch 601 to the first antenna, and is transmitted by the first antenna.

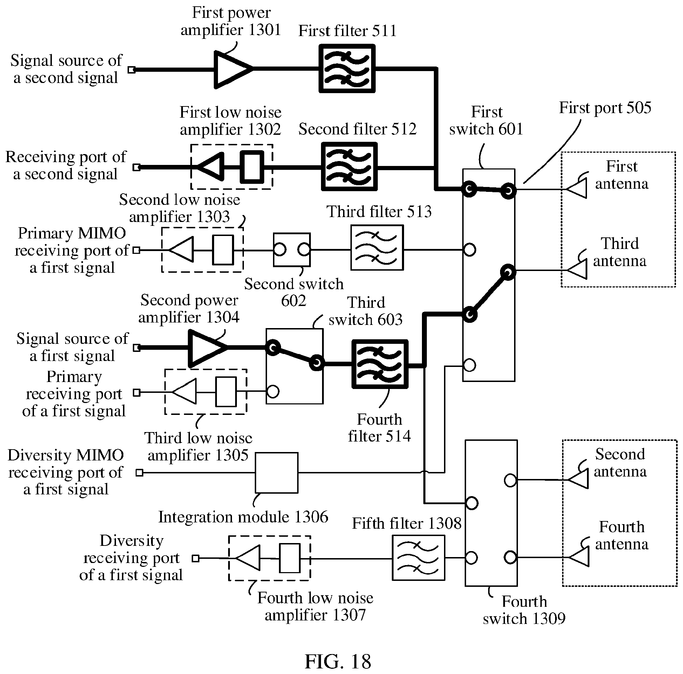

When the SRS is sent through the third antenna, a working state of the radio frequency module is the same as that in FIG. 18. FIG. 18 is a schematic diagram of working of still another radio frequency module according to an embodiment of this application. It may be learnt that the first switch 601 connects the first filter 511 and the second filter 512 to the first antenna; and the integration module 1306 is disconnected from the third antenna, and the fourth filter 514 is connected to the third antenna. In other words, diversity receiving of B3 is temporarily interrupted, and an SRS in N41 is transmitted by preempting the third antenna. The second switch 602 is turned off; the third switch 603 connects the second power amplifier 1304 to the fourth filter 514; and the fourth switch 1309 is turned off.

The SRS is sent by the signal source of the first signal, sequentially passes through the second power amplifier 1304, the third switch 603, the fourth filter 514, the first switch 601 to the third antenna, and is transmitted by the third antenna.

It should be noted that when the SRS is sent through the third antenna, the third filter 513 needs to be disconnected from the first antenna, to prevent two filters (the third filter 513 and the fourth filter 514) of the first signal from being connected in parallel and affecting normal working of the radio frequency module.

In this way, 1T4R SRS of the first signal may be implemented. It should be noted that when the first signal is N41, and the second signal is B3, a transmission path shown in FIG. 17 allows both transmission of N41 and transmission of B3 to be performed on the first antenna. However, duration of the SRS is short (about 35 us), which may be ignored compared with uplink and downlink duration (about 500 us) of N41. Therefore, intermodulation impact of N41 and B3 may be ignored, and working of the radio frequency module is not affected.

In addition, it should be noted that when the radio frequency module works in the state shown in FIG. 17, filters that are connected to the first port 505 include the first filter 511, the second filter 512, the third filter 513, and the fourth filter 514. Compared with the states shown in FIG. 14, FIG. 16, and FIG. 18, the impedance at the first port 505 jumps. However, a switching frequency of the SRS is much less than a switching frequency between the transmission slot and the receiving slot of the first signal. Therefore, jump of the impedance may be ignored.

In embodiments of this application, each of the foregoing switches may be controlled by a controller, to switch to different states in the transmission slot and the receiving slot of the first signal.

The radio frequency module provided in embodiments of this application is introduced above by using the multiplexer shown in FIG. 6 as an example. It should be understood that the multiplexer in the radio frequency module may be the multiplexer in any one of the foregoing embodiments, and is not limited to the multiplexer shown in FIG. 6.

It should also be noted that the switch c in FIG. 1 is a DP4T switch, and the fourth switch in the multiplexer and the radio frequency module provided in embodiments of this application only needs to be a DPDT switch to meet the requirement. This is beneficial to reducing an occupied area of the radio frequency module.

Embodiments of this application further provide an electronic device. The electronic device may include the multiplexer or the radio frequency module described in any one of the foregoing embodiments.

Although the multiplexer and the radio frequency module provided in this application is described with reference to specific features and embodiments thereof, it is clear that various modifications and combinations may be made to them without departing from the scope of this application. Correspondingly, the specification and the accompanying drawings are merely example descriptions of this application defined in the appended claims, and are considered as any of or all modifications, variations, combinations or equivalents that cover the scope of this application. This application is intended to cover these modifications and variations of this application provided that they fall within the scope of protection defined by the following claims.

## Claims

1. A multiplexer, configured to transmit a first signal and a second signal, wherein the first signal is a signal in a time-division duplex frequency band, and the second signal is a signal in a frequency-division duplex frequency band; and the multiplexer comprises: a first link (501), a second link (502), a third link (503), and a fourth link (504), wherein
the first link (501) comprises a first filter (511); a passband of the first filter (511) is an uplink frequency band of the second signal; the second link (502) comprises a second filter (512); a passband of the second filter (512) is a downlink frequency band of the second signal;
both the first link (501) and the second link (502) work on a first antenna through a first port (505); the first link (501) is used to send the second signal; the second link (502) is used to receive the second signal;
the third link (503) comprises a third filter (513); the fourth link (504) comprises a fourth filter (514); a passband of the third filter (513) and a passband of the fourth filter (514) are frequency bands covered by the first signal;
in a transmission slot of the first signal, the third link (503) is connected to the first port (505), and the third link (503) does not work; the fourth link (504) sends the first signal through a second port (506), and the second port (506) is different from the first port (505);
in a receiving slot of the first signal, the third link (503) works on the first antenna through the first port (505), to perform primary MIMO receiving of the first signal; and the fourth link (504) performs primary receiving of the first signal through the second port (506); and
wherein the first link (501), the second link (502), and the third link (503) further comprise a first switch (601); the third link (503) further comprises a second switch (602); the fourth link (504) further comprises a third switch (603); the first switch (601) is connected to the first port (505);
one end of the first filter (511) is connected to the first switch (601), and an other end of the first filter (511) is connected to a signal source of the second signal; the signal source of the second signal is used to output an uplink signal of the second signal;
one end of the second filter (512) is connected to the first switch (601), and an other end of the second filter (512) is connected to a receiving port of the second signal; the receiving port of the second signal is configured to receive a downlink signal of the second signal received by the first antenna;
one end of the second switch (602) is connected to a primary MIMO receiving port of the first signal, and an other end of the second switch (602) is connected to the first switch (601) through the third filter (513); the primary MIMO receiving port of the first signal is configured to perform primary MIMO receiving of the first signal;
the third switch (603) is separately connected to a signal source of the first signal, a primary receiving port of the first signal, and the fourth filter (514); the fourth filter (514) is further connected to the second port (506); the second port (506) is further connected to a second antenna; the signal source of the first signal is used to output the first signal; the primary receiving port of the first signal is configured to perform primary receiving of the first signal;
the first switch (601) is configured to connect the first filter (511), the second filter (512), and the third filter (513) to the first port (505);
the second switch (602) is configured to be turned off in the transmission slot of the first signal; and connect the third filter (513) to the primary MIMO receiving port of the first signal in the receiving slot of the first signal; and
the third switch (603) is configured to connect the signal source of the first signal to the fourth filter (514), and disconnect the primary receiving port of the first signal from the fourth filter (514) in the transmission slot of the first signal; and connect the primary receiving port of the first signal to the fourth filter (514), and disconnect the signal source of the first signal from the fourth filter (514) in the receiving slot of the first signal.

2. The multiplexer according to claim 1, wherein the uplink signal of the second signal is transmitted from the signal source of the second signal to the first antenna after sequentially passing through the first filter (511), the first switch (601), and the first port (505), to cause the first antenna to transmit the uplink signal of the second signal; and
after being received by the first antenna, the downlink signal of the second signal is transmitted to the receiving port of the second signal after sequentially passing through the first port (505), the first switch (601), and the second filter (512), to cause the receiving port of the second signal to complete receiving.

3. The multiplexer according to claim 1, wherein in the transmission slot of the first signal, the first signal is transmitted from the signal source of the first signal to the second antenna after sequentially passing through the third switch (603), the fourth filter (514), and the second port (506), to cause the second antenna to transmit the first signal;
a primary receiving path of the first signal is the second antenna, the second port (506), the fourth filter (514), the third switch (603), and a primary receiving port of the second signal in the receiving slot of the first signal; and a primary MIMO receiving path of the first signal is the first antenna, the first port (505), the first switch (601), the third filter (513), the second switch (602), and the primary MIMO receiving port of the first signal.

4. The multiplexer according to any one of claims 1 to 3, wherein the multiplexer further comprises a fifth link (1107) and a sixth link (1108);
the fifth link (1107) is connected to a fourth antenna through a third port; the sixth link (1108) is connected to a third antenna through a fourth port; the third port is different from the first port (505); the fourth port is different from the first port (505);
the fifth link (1107) is used to perform diversity receiving of the first signal through the fourth antenna in the receiving slot of the first signal; and
the sixth link (1108) is used to perform diversity MIMO receiving of the first signal through the third antenna in the receiving slot of the first signal.

5. The multiplexer according to claim 4, wherein the fifth link (1107) comprises a fifth filter (1117) and a fourth switch (1110); one end of the fifth filter (1117) is connected to a diversity receiving port of the first signal, and an other end of the fifth filter (1117) is connected to the fourth switch (1110); the diversity receiving port of the first signal is configured to perform diversity receiving of the first signal; the fourth switch (1110) is connected to the third port;
the fourth filter (514) is connected to the second port (506) through the fourth switch (1110);
the sixth link (1108) comprises the first switch (601); the first switch (601) is separately connected to the fourth port and a diversity MIMO receiving port of the first signal; the diversity MIMO receiving port of the first signal is configured to perform diversity MIMO receiving of the first signal;
a passband of the fifth filter (1117) is a frequency band covered by the first signal;
the first switch (601) is further configured to connect the diversity MIMO receiving port of the first signal and the fourth port in the transmission slot of the first signal; and connect the diversity **MIMO** receiving port of the first signal and the fourth port in the receiving slot of the first signal; and
the fourth switch (1110) is further configured to connect the fourth filter (514) and the second port (506), and disconnect the fifth filter (1117) from the third port in the transmission slot of the first signal; and connect the fourth filter (514) and the second port (506), and connect the fifth filter (1117) and the third port in the receiving slot of the first signal.

6. The multiplexer according to claim 5, wherein a diversity receiving path of the first signal is the fourth antenna, the third port, the fourth switch (1110), the fifth filter (1117), and the diversity receiving port of the first signal in the receiving slot of the first signal; and a diversity **MIMO** receiving path of the first signal is the third antenna, the fourth port, the first switch (601), and the diversity MIMO receiving port of the first signal.

7. The multiplexer according to claim 1, wherein the first signal is a high frequency signal, and the second signal is an intermediate frequency signal.

8. A radio frequency module, wherein the radio frequency module comprises: a first power amplifier, a second power amplifier, a first low noise amplifier, a second low noise amplifier, a third low noise amplifier, and the multiplexer according to any one of claims 1 to 7;
a first filter (511) in the multiplexer is connected to a signal source of a second signal through the first power amplifier;
a second filter (512) in the multiplexer is connected to a receiving port of the second signal through the first low noise amplifier;
a third filter (513) in the multiplexer sequentially passes through the second switch (602) in the multiplexer, and is connected to a primary MIMO receiving port of a first signal through the second low noise amplifier;
a third switch (603) in the multiplexer is connected to a signal source of the first signal through the second power amplifier, and the third switch (603) is further connected to a primary receiving port of the first signal through the third low noise amplifier;
the power amplifier is configured to amplify a radio frequency power of a corresponding signal; and the low noise amplifier is configured to filter noise in the corresponding signal.

9. An electronic device, wherein the electronic device comprises the multiplexer according to any one of claims 1 to 7 or the radio frequency module according to claim 8.

## Patentansprüche

1. Multiplexer, der dazu konfiguriert ist, ein erstes Signal und ein zweites Signal zu übertragen, wobei das erste Signal ein Signal in einem TDD-Frequenzband (Zeitduplex) ist und das zweite Signal ein Signal in einem FDD-Frequenzband (Frequenzduplex) ist; und wobei der Multiplexer umfasst: einen ersten Zweig (501), einen zweiten Zweig (502), einen dritten Zweig (503) und einen vierten Zweig (504), wobei
der erste Zweig (501) ein erstes Filter (511) umfasst; ein Durchlassbereich des ersten Filters (511) ein Uplink-Frequenzband des zweiten Signals ist; der zweite Zweig (502) ein zweites Filter (512) umfasst; ein Durchlassbereich des zweiten Filters (512) ein Downlink-Frequenzband des zweiten Signals ist;
sowohl der erste Zweig (501) als auch der zweite Zweig (502) über einen ersten Port (505) an einer ersten Antenne arbeiten; der erste Zweig (501) dazu verwendet wird, das zweite Signal zu senden; der zweite Zweig (502) dazu verwendet wird, das zweite Signal zu empfangen;
der dritte Zweig (503) ein drittes Filter (513) umfasst; der vierte Zweig (504) ein viertes Filter (514) umfasst; ein Durchlassbereich des dritten Filters (513) und ein Durchlassbereich des vierten Filters (514) Frequenzbänder sind, die von dem ersten Signal abgedeckt werden;
in einem Sendezeitschlitz des ersten Signals der dritte Zweig (503) mit dem ersten Port (505) verbunden ist und der dritte Zweig (503) nicht arbeitet; der vierte Zweig (504) das erste Signal über einen zweiten Port (506) sendet, und sich der zweite Port (506) von dem ersten Port (505) unterscheidet;
in einem Empfangszeitschlitz des ersten Signals der dritte Zweig (503) über den ersten Port (505) an der ersten Antenne arbeitet, um einen primären MIMO-Empfang des ersten Signals durchzuführen; und der vierte Zweig (504) einen primären Empfang des ersten Signals über den zweiten Port (506) durchführt; und
wobei der erste Zweig (501), der zweite Zweig (502) und der dritte Zweig (503) ferner einen ersten Schalter (601) umfassen; der dritte Zweig (503) ferner einen zweiten Schalter (602) umfasst; der vierte Zweig (504) ferner einen dritten Schalter (603) umfasst; der erste Schalter (601) mit dem ersten Port (505) verbunden ist;
wobei ein Ende des ersten Filters (511) mit dem ersten Schalter (601) verbunden ist und ein anderes Ende des ersten Filters (511) mit einer Signalquelle des zweiten Signals verbunden ist; die Signalquelle des zweiten Signals dazu verwendet wird, ein Uplink-Signal des zweiten Signals auszugeben;
wobei ein Ende des zweiten Filters (512) mit dem ersten Schalter (601) verbunden ist und ein anderes Ende des zweiten Filters (512) mit einem Empfangsanschluss des zweiten Signals verbunden ist; der Empfangsanschluss des zweiten Signals dazu konfiguriert ist, ein Downlink-Signal des zweiten Signals zu empfangen, das von der ersten Antenne empfangen wurde;
wobei ein Ende des zweiten Schalters (602) mit einem primären MIMO-Empfangsport des ersten Signals verbunden ist und ein anderes Ende des zweiten Schalters (602) mit dem ersten Schalter (601) über das dritte Filter (513) verbunden ist; der primäre MIMO-Empfangsport des ersten Signals so konfiguriert ist, dass er den primären MIMO-Empfang des ersten Signals durchführt;
wobei der dritte Schalter (603) separat mit einer Signalquelle des ersten Signals, einem primären Empfangsport des ersten Signals und dem vierten Filter (514) verbunden ist; das vierte Filter (514) ferner mit dem zweiten Port (506) verbunden ist; der zweite Port (506) ferner mit einer zweiten Antenne verbunden ist; die Signalquelle des ersten Signals verwendet wird, um das erste Signal auszugeben; der primäre Empfangsport des ersten Signals so konfiguriert ist, dass er den primären Empfang des ersten Signals durchführt;
wobei der erste Schalter (601) so konfiguriert ist, dass er das erste Filter (511), das zweite Filter (512) und das dritte Filter (513) mit dem ersten Port (505) verbindet;
wobei der zweite Schalter (602) so konfiguriert ist, dass er im Sendezeitschlitz des ersten Signals geöffnet wird; und das dritte Filter (513) im Empfangszeitschlitz des ersten Signals mit dem primären MIMO-Empfangsport des ersten Signals verbindet; und
wobei der dritte Schalter (603) so konfiguriert ist, dass er die Signalquelle des ersten Signals mit dem vierten Filter (514) verbindet und den primären Empfangsport des ersten Signals von dem vierten Filter (514) im Sendezeitschlitz des ersten Signals trennt; und den primären Empfangsport des ersten Signals mit dem vierten Filter (514) verbindet und die Signalquelle des ersten Signals von dem vierten Filter (514) im Empfangszeitschlitz des ersten Signals trennt.

2. Multiplexer nach Anspruch 1, wobei das Uplink-Signal des zweiten Signals von der Signalquelle des zweiten Signals zur ersten Antenne übertragen wird, nachdem es nacheinander das erste Filter (511), den ersten Schalter (601) und den ersten Port (505) durchlaufen hat, um die erste Antenne zu veranlassen, das Uplink-Signal des zweiten Signals zu übertragen; und
nachdem das Downlink-Signal des zweiten Signals von der ersten Antenne empfangen wurde, wird es an den Empfangsport des zweiten Signals übertragen, nachdem es nacheinander den ersten Port (505), den ersten Schalter (601) und das zweite Filter (512) durchlaufen hat, um den Empfangsport des zweiten Signals zu veranlassen, den Empfang abzuschließen.

3. Multiplexer nach Anspruch 1, wobei im Sendezeitschlitz des ersten Signals das erste Signal von der Signalquelle des ersten Signals zur zweiten Antenne übertragen wird, nachdem es nacheinander den dritten Schalter (603), das vierten Filter (514) und den zweiten Port (506) durchlaufen hat, um die zweite Antenne zu veranlassen, das erste Signal zu übertragen;
ein primärer Empfangspfad des ersten Signals über die zweite Antenne, den zweiten Port (506), das vierte Filter (514), den dritten Schalter (603) und einen primären Empfangsport des ersten Signals im Empfangszeitschlitz des ersten Signals verläuft; und ein primärer MIMO-Empfangspfad des ersten Signals über die erste Antenne, den ersten Port (505), den ersten Schalter (601), das dritte Filter (513), den zweiten Schalter (602) und den primären MIMO-Empfangsport des ersten Signals verläuft.

4. Multiplexer nach einem der Ansprüche 1 bis 3, wobei der Multiplexer ferner einen fünften Zweig (1107) und einen sechsten Zweig (1108) umfasst;
wobei der fünfte Zweig (1107) über einen dritten Port mit einer vierten Antenne verbunden ist; der sechste Zweig (1108) über einen vierten Port mit einer dritten Antenne verbunden ist; der dritte Port sich von dem ersten Port (505) unterscheidet; der vierte Port sich von dem ersten Port (505) unterscheidet;
wobei der fünfte Zweig (1107) verwendet wird, um Diversity-Empfang des ersten Signals über die vierte Antenne im Empfangszeitschlitz des ersten Signals durchzuführen; und
wobei der sechste Zweig (1108) verwendet wird, um Diversity-MIMO-Empfang des ersten Signals über die dritte Antenne im Empfangszeitschlitz des ersten Signals durchzuführen.

5. Multiplexer nach Anspruch 4, wobei der fünfte Zweig (1107) ein fünftes Filter (1117) und einen vierten Schalter (1110) umfasst; ein Ende des fünften Filters (1117) mit einem Diversity-Empfangsport des ersten Signals verbunden ist und ein anderes Ende des fünften Filters (1117) mit dem vierten Schalter (1110) verbunden ist; der Diversity-Empfangsport des ersten Signals dazu konfiguriert ist, Diversity-Empfang des ersten Signals durchzuführen; der vierte Schalter (1110) mit dem dritten Port verbunden ist;
wobei das vierte Filter (514) über den vierten Schalter (1110) mit dem zweiten Port (506) verbunden ist;
wobei der sechste Zweig (1108) den ersten Schalter (601) umfasst; der erste Schalter (601) separat mit dem vierten Port und einem Diversity-MIMO-Empfangsport des ersten Signals verbunden ist; der Diversity-MIMO-Empfangsport des ersten Signals dazu konfiguriert ist, Diversity-MIMO-Empfang des ersten Signals durchzuführen;
ein Durchlassbereich des fünften Filters (1117) ein vom ersten Signal abgedecktes Frequenzband ist;
der erste Schalter (601) ferner dazu konfiguriert ist, den Diversity-MIMO-Empfangsport des ersten Signals und den vierten Port im Sendezeitschlitz des ersten Signals zu verbinden; und den Diversity-MIMO-Empfangsport des ersten Signals und den vierten Port im Empfangszeitschlitz des ersten Signals zu verbinden; und
der vierte Schalter (1110) ferner dazu konfiguriert ist, das vierte Filter (514) und den zweiten Port (506) zu verbinden sowie das fünfte Filter (1117) im Sendezeitschlitz des ersten Signals vom dritten Port zu trennen; und das vierte Filter (514) und den zweiten Port (506) zu verbinden sowie das fünfte Filter (1117) und den dritten Port im Empfangszeitschlitz des ersten Signals zu verbinden.

6. Multiplexer nach Anspruch 5, wobei ein Diversity-Empfangspfad des ersten Signals über die vierte Antenne, den dritten Port, den vierten Schalter (1110), das fünfte Filter (1117) und den Diversity-Empfangsport des ersten Signals im Empfangszeitschlitz des ersten Signals verläuft; und ein Diversity-MIMO-Empfangspfad des ersten Signals über die dritte Antenne, den vierten Port, den ersten Schalter (601) und den Diversity-MIMO-Empfangsport des ersten Signals verläuft.

7. Multiplexer nach Anspruch 1, wobei das erste Signal ein Hochfrequenzsignal und das zweite Signal ein Zwischenfrequenzsignal ist.

8. Hochfrequenzmodul, wobei das Hochfrequenzmodul umfasst: einen ersten Leistungsverstärker, einen zweiten Leistungsverstärker, einen ersten rauscharmen Verstärker, einen zweiten rauscharmen Verstärker, einen dritten rauscharmen Verstärker und den Multiplexer nach einem der Ansprüche 1 bis 7;
wobei ein erstes Filter (511) im Multiplexer über den ersten Leistungsverstärker mit einer Signalquelle eines zweiten Signals verbunden ist;
wobei ein zweites Filter (512) im Multiplexer über den ersten rauscharmen Verstärker mit einem Empfangsport des zweiten Signals verbunden ist;
wobei ein drittes Filter (513) im Multiplexer nacheinander durch den zweiten Schalter (602) im Multiplexer verläuft und über den zweiten rauscharmen Verstärker mit einem primären MIMO-Empfangsport eines ersten Signals verbunden ist;
wobei ein dritter Schalter (603) im Multiplexer über den zweiten Leistungsverstärker mit einer Signalquelle des ersten Signals verbunden ist, und der dritte Schalter (603) ferner über den dritten rauscharmen Verstärker mit einem primären Empfangsport des ersten Signals verbunden ist;
der Leistungsverstärker dazu konfiguriert ist, eine Hochfrequenzleistung eines entsprechenden Signals zu verstärken; und der rauscharme Verstärker dazu konfiguriert ist, Rauschen im entsprechenden Signal zu filtern.

9. Elektronische Vorrichtung, wobei die elektronische Vorrichtung den Multiplexer nach einem der Ansprüche 1 bis 7 oder das Hochfrequenzmodul nach Anspruch 8 umfasst.

## Revendications

1. Multiplexeur, configuré pour transmettre un premier signal et un second signal, dans lequel le premier signal est un signal dans une bande de fréquences duplex à répartition dans le temps (TDD), et le second signal est un signal dans une bande de fréquences duplex à répartition en fréquence (FDD) ; et le multiplexeur comprend : une première liaison (501), une deuxième liaison (502), une troisième liaison (503) et une quatrième liaison (504), dans lequel
la première liaison (501) comprend un premier filtre (511) ; une bande passante du premier filtre (511) est une bande de fréquences de liaison montante du second signal ; la deuxième liaison (502) comprend un deuxième filtre (512) ; une bande passante du deuxième filtre (512) est une bande de fréquences de liaison descendante du second signal ;
la première liaison (501) et la deuxième liaison (502) fonctionnent toutes deux sur une première antenne via un premier port (505) ; la première liaison (501) est utilisée pour envoyer le second signal ; la deuxième liaison (502) est utilisée pour recevoir le second signal ;
la troisième liaison (503) comprend un troisième filtre (513) ; la quatrième liaison (504) comprend un quatrième filtre (514) ; une bande passante du troisième filtre (513) et une bande passante du quatrième filtre (514) sont des bandes de fréquences couvertes par le premier signal ;
dans un créneau d'émission du premier signal, la troisième liaison (503) est connectée au premier port (505), et la troisième liaison (503) ne fonctionne pas ; la quatrième liaison (504) envoie le premier signal via un second port (506), et le second port (506) est différent du premier port (505) ;
dans un créneau de réception du premier signal, la troisième liaison (503) fonctionne sur la première antenne via le premier port (505), pour effectuer une réception MIMO primaire du premier signal ; et la quatrième liaison (504) effectue une réception primaire du premier signal via le second port (506) ; et
dans lequel la première liaison (501), la deuxième liaison (502) et la troisième liaison (503) comprennent en outre un premier commutateur (601) ; la troisième liaison (503) comprend en outre un deuxième commutateur (602) ; la quatrième liaison (504) comprend en outre un troisième commutateur (603) ; le premier commutateur (601) est connecté au premier port (505) ;
une extrémité du premier filtre (511) est connectée au premier commutateur (601), et une autre extrémité du premier filtre (511) est connectée à une source de signal du second signal ; la source de signal du second signal est utilisée pour délivrer un signal de liaison montante du second signal ;
une extrémité du deuxième filtre (512) est connectée au premier commutateur (601), et une autre extrémité du deuxième filtre (512) est connectée à un port de réception du second signal ; le port de réception du second signal est configuré pour recevoir un signal de liaison descendante du second signal reçu par la première antenne ;
une extrémité du deuxième commutateur (602) est connectée à un port de réception MIMO primaire du premier signal, et une autre extrémité du deuxième commutateur (602) est connectée au premier commutateur (601) par l'intermédiaire du troisième filtre (513) ; le port de réception MIMO primaire du premier signal est configuré pour effectuer une réception MIMO primaire du premier signal ;
le troisième commutateur (603) est connecté séparément à une source de signal du premier signal, à un port de réception primaire du premier signal, et au quatrième filtre (514) ; le quatrième filtre (514) est en outre connecté au deuxième port (506) ; le deuxième port (506) est en outre connecté à une deuxième antenne ; la source de signal du premier signal est utilisée pour émettre le premier signal ; le port de réception primaire du premier signal est configuré pour effectuer une réception primaire du premier signal ;
le premier commutateur (601) est configuré pour connecter le premier filtre (511), le deuxième filtre (512) et le troisième filtre (513) au premier port (505) ;
le deuxième commutateur (602) est configuré pour être ouvert dans le créneau d'émission du premier signal ; et pour connecter le troisième filtre (513) au port de réception MIMO primaire du premier signal dans le créneau de réception du premier signal ; et
le troisième commutateur (603) est configuré pour connecter la source de signal du premier signal au quatrième filtre (514), et déconnecter le port de réception primaire du premier signal du quatrième filtre (514) dans le créneau d'émission du premier signal ; et pour connecter le port de réception primaire du premier signal au quatrième filtre (514), et déconnecter la source de signal du premier signal du quatrième filtre (514) dans le créneau de réception du premier signal.

2. Multiplexeur selon la revendication 1, dans lequel le signal de liaison montante du deuxième signal est transmis depuis la source de signal du deuxième signal vers la première antenne après être passé séquentiellement par le premier filtre (511), le premier commutateur (601) et le premier port (505), pour amener la première antenne à transmettre le signal de liaison montante du deuxième signal ; et
après avoir été reçu par la première antenne, le signal de liaison descendante du deuxième signal est transmis au port de réception du deuxième signal après être passé séquentiellement par le premier port (505), le premier commutateur (601) et le deuxième filtre (512), pour amener le port de réception du deuxième signal à terminer la réception.

3. Multiplexeur selon la revendication 1, dans lequel, dans le créneau d'émission du premier signal, le premier signal est transmis depuis la source de signal du premier signal vers la deuxième antenne après être passé séquentiellement par le troisième commutateur (603), le quatrième filtre (514) et le deuxième port (506), pour amener la deuxième antenne à transmettre le premier signal ;
un chemin de réception principal du premier signal est la deuxième antenne, le deuxième port (506), le quatrième filtre (514), le troisième commutateur (603), et un port de réception principal du premier signal dans le créneau de réception du premier signal ; et un chemin de réception MIMO principal du premier signal est la première antenne, le premier port (505), le premier commutateur (601), le troisième filtre (513), le deuxième commutateur (602), et le port de réception MIMO principal du premier signal.

4. Multiplexeur selon l'une quelconque des revendications 1 à 3, dans lequel le multiplexeur comprend en outre une cinquième liaison (1107) et une sixième liaison (1108) ;
la cinquième liaison (1107) est connectée à une quatrième antenne par l'intermédiaire d'un troisième port ; la sixième liaison (1108) est connectée à une troisième antenne par l'intermédiaire d'un quatrième port ; le troisième port est différent du premier port (505) ; le quatrième port est différent du premier port (505) ;
la cinquième liaison (1107) est utilisée pour effectuer une réception en diversité du premier signal par l'intermédiaire de la quatrième antenne dans le créneau de réception du premier signal ; et
la sixième liaison (1108) est utilisée pour effectuer une réception MIMO en diversité du premier signal par l'intermédiaire de la troisième antenne dans le créneau de réception du premier signal.

5. Multiplexeur selon la revendication 4, dans lequel la cinquième liaison (1107) comprend un cinquième filtre (1117) et un quatrième commutateur (1110) ; une extrémité du cinquième filtre (1117) est connectée à un port de réception en diversité du premier signal, et une autre extrémité du cinquième filtre (1117) est connectée au quatrième commutateur (1110) ; le port de réception en diversité du premier signal est configuré pour effectuer une réception en diversité du premier signal ; le quatrième commutateur (1110) est connecté au troisième port ;
le quatrième filtre (514) est connecté au deuxième port (506) par l'intermédiaire du quatrième commutateur (1110) ;
la sixième liaison (1108) comprend le premier commutateur (601) ; le premier commutateur (601) est connecté séparément au quatrième port et à un port de réception MIMO en diversité du premier signal ; le port de réception MIMO en diversité du premier signal est configuré pour effectuer une réception MIMO en diversité du premier signal ;
une bande passante du cinquième filtre (1117) est une bande de fréquences couverte par le premier signal ;
le premier commutateur (601) est en outre configuré pour connecter le port de réception MIMO en diversité du premier signal et le quatrième port dans le créneau d'émission du premier signal ; et pour connecter le port de réception MIMO en diversité du premier signal et le quatrième port dans le créneau de réception du premier signal ; et
le quatrième commutateur (1110) est en outre configuré pour connecter le quatrième filtre (514) et le deuxième port (506), et déconnecter le cinquième filtre (1117) du troisième port dans le créneau d'émission du premier signal ; et pour connecter le quatrième filtre (514) et le deuxième port (506), et connecter le cinquième filtre (1117) et le troisième port dans le créneau de réception du premier signal.

6. Multiplexeur selon la revendication 5, dans lequel un chemin de réception en diversité du premier signal est la quatrième antenne, le troisième port, le quatrième commutateur (1110), le cinquième filtre (1117), et le port de réception en diversité du premier signal dans le créneau de réception du premier signal ; et un chemin de réception MIMO en diversité du premier signal est la troisième antenne, le quatrième port, le premier commutateur (601), et le port de réception MIMO en diversité du premier signal.

7. Multiplexeur selon la revendication 1, dans lequel le premier signal est un signal haute fréquence, et le deuxième signal est un signal moyenne fréquence.

8. Module radiofréquence, dans lequel le module radiofréquence comprend : un premier amplificateur de puissance, un deuxième amplificateur de puissance, un premier amplificateur à faible bruit, un deuxième amplificateur à faible bruit, un troisième amplificateur à faible bruit, et le multiplexeur selon l'une quelconque des revendications 1 à 7 ;
un premier filtre (511) dans le multiplexeur est connecté à une source de signal d'un deuxième signal via le premier amplificateur de puissance ;
un deuxième filtre (512) dans le multiplexeur est connecté à un port de réception du deuxième signal via le premier amplificateur à faible bruit ;
un troisième filtre (513) dans le multiplexeur passe séquentiellement par le deuxième commutateur (602) dans le multiplexeur, et est connecté à un port de réception MIMO primaire d'un premier signal via le deuxième amplificateur à faible bruit ;
un troisième commutateur (603) dans le multiplexeur est connecté à une source de signal du premier signal via le deuxième amplificateur de puissance, et le troisième commutateur (603) est en outre connecté à un port de réception primaire du premier signal via le troisième amplificateur à faible bruit ;
l'amplificateur de puissance est configuré pour amplifier une puissance radiofréquence d'un signal correspondant ; et l'amplificateur à faible bruit est configuré pour filtrer le bruit dans le signal correspondant.

9. Dispositif électronique, dans lequel le dispositif électronique comprend le multiplexeur selon l'une quelconque des revendications 1 à 7 ou le module radiofréquence selon la revendication 8.
